# EUROPEAN PATENT APPLICATION

(11) **EP 4 458 149 A1**
(43) Date of publication of application: **06.11.2024**
(21) Application number: 24159016.5
(22) Date of filing: 22.02.2024
(51) Int. Cl.: A01M 7/00

(54) **CONTROL METHOD FOR SPRAYER, CONTROL PROGRAM FOR SPRAYER, CONTROL SYSTEM FOR SPRAYER, AND SPRAYER**

(30) Priority: 10.03.2023 JP 2023037162
(71) Applicant: Yanmar Holdings Co., Ltd., Osaka-shi, Osaka (JP)
(72) Inventor: OTA, Kohei, Osaka (JP); KANO, Tomohisa, Osaka (JP); HOMMA, Terasu, Osaka (JP); YUKI, Hidehiro, Osaka (JP)
(74) Representative: Novagraaf International SA

(57) **Abstract**

[Problem] The present invention provides a control method for a sprayer, a control program for a sprayer, a control system for a sprayer, and a sprayer, each of which eliminates or minimizes reduction in work efficiency.

[Solution] The control method for a sprayer is a control method for a sprayer including a spray device. This control method includes: automatically operating the spray device; and only while a cancellation condition is satisfied, canceling automatic operation of the spray device to manually operate the spray device according to a user's manipulation, and thereby enabling operation check of the spray device.

## Description

### TECHNICAL FIELD

The present invention relates to a control method for a sprayer including a spray device, a control program for a sprayer, a control system for a sprayer, and a sprayer.

### BACKGROUND ART

In the related art, a control system (an automatic travel system) for a sprayer is proposed (for example, see Patent Document 1). The control system allows a sprayer (a work vehicle) to travel automatically along a target route in a work site. The control system described in the related art allows the sprayer to travel automatically in a predetermined row order while performing predetermined work on work objects that are arranged in a plurality of rows in the work site. The sprayer performs spraying work as the predetermined work. In the spraying work, the sprayer sprays a spray material such as a chemical solution or water on crops (the work objects) that are planted in a field (the work site).

In the related art, a work device control unit controls the spray device to enable automatic travel of the spray device. Soon after the sprayer starts the automatic travel along the target route, the spray device starts the spraying work.

### PRIOR ART DOCUMENT

### PATENT DOCUMENT

Patent Document 1: Japanese Unexamined Patent Application Publication No. 2022-183962

### SUMMARY OF INVENTION

### TECHNICAL PROBLEM

In the related art, for example, in order to check operation of the spray device, a manipulator has to approach the automatically traveling sprayer and check the operation of the automatically operated spray device. This may reduce work efficiency due to the need for taking a countermeasure to eliminate exposure of the manipulator to the spray material.

The present invention has an object of providing a control method for a sprayer, a control program for a sprayer, a control system for a sprayer, and a sprayer, each of which eliminates or minimizes reduction in work efficiency.

### SOLUTION TO PROBLEM

A control method for a sprayer according to an aspect of the present invention is a control method for a sprayer including a spray device, and includes: automatically operating the spray device; and, only while a cancellation condition is satisfied, canceling automatic operation of the spray device to manually operate the spray device according to a user's manipulation, and thereby enabling checking of operation related to the spray device.

A control program for a sprayer according to another aspect of the present invention is a program causing one or more processors to execute the control method for a sprayer.

A control system for a sprayer according to further another aspect of the present invention includes a spray processing unit that automatically operates a spray device of a sprayer. Only while a cancellation condition is satisfied, the spray processing unit cancels automatic operation of the spray device to manually operate the spray device according to a user's manipulation, and thereby enables checking of operation related to the spray device.

A sprayer according to further another aspect of the present invention includes: the control system for a sprayer; and a body to which the spray device is mounted.

### ADVANTAGEOUS EFFECTS OF INVENTION

The present invention can provide the control method for a sprayer, the control program for a sprayer, the control system for a sprayer, and the sprayer, each of which eliminates or minimizes reduction in work efficiency.

### BRIEF DESCRIPTION OF DRAWINGS

FIG. 1 is an external view in which a sprayer according to a first embodiment is seen from a front left side.
FIG. 2 is a back external view in which the sprayer according to the first embodiment is seen from a back side.
FIG. 3 is a view illustrating an example of crop rows for which the sprayer according to the first embodiment is used.
FIG. 4 is a schematic view illustrating an overall configuration of an automated work system using the sprayer according to the first embodiment.
FIG. 5 is a block diagram schematically illustrating a main configuration of the automated work system according to the first embodiment.
FIG. 6 is a left external view in which the sprayer according to the first embodiment is seen from a left side.
FIG. 7 is a right external view in which the sprayer according to the first embodiment is seen from a right side.
FIG. 8 is an upper external view in which the sprayer according to the first embodiment is seen from above.
FIG. 9 is a back external view in which the sprayer according to the first embodiment is seen from the back side.
FIG. 10 is a schematic view illustrating a state where the sprayer according to the first embodiment is seen obliquely from behind.
FIG. 11 is an enlarged view of an area Z1 in FIG. 7, and provides an external view of a manual manipulation device in a bubble.
FIG. 12 is a schematic view for explaining the operation of the automatic travel by the sprayer according to the first embodiment.
FIG. 13 is a flowchart illustrating a control method according to the first embodiment, in particular, an example of processing related to activation processing.
FIG. 14 is a schematic view illustrating examples of a display screen displayed in a display unit by the control method according to the first embodiment.
FIG. 15 is a schematic view illustrating exemplary screen transition of an operation check screen that is displayed in the display unit by the control method according to the first embodiment.
FIG. 16 is a schematic view illustrating exemplary screen transition of a flow rate adjustment screen that is displayed in the display unit by the control method according to the first embodiment.
FIG. 17 is a schematic view illustrating exemplary screen transition of a return valve adjustment screen that is displayed in the display unit by the control method according to the first embodiment.
FIG. 18 is a schematic view illustrating the exemplary screen transition of the return valve adjustment screen that is displayed in the display unit by the control method according to the first embodiment.
FIG. 19 is a schematic view illustrating the exemplary screen transition of the operation check screen that is displayed in the display unit by the control method according to the first embodiment.
FIG. 20 is a flowchart illustrating the control method according to the first embodiment, in particular, an example of processing related to manual operation of a spray device.
FIG. 21 is a flowchart illustrating the control method according to the first embodiment, in particular, an example of processing related to manual travel of the sprayer.

### DESCRIPTION OF EMBODIMENTS

Hereinafter, embodiments of the present invention will be described with reference to the accompanying drawings. Each of the following embodiments constitutes an example that embodies the present invention, and has no intention to limit the technical scope of the present invention.

### (First Embodiment)

### [1] Overall Configuration

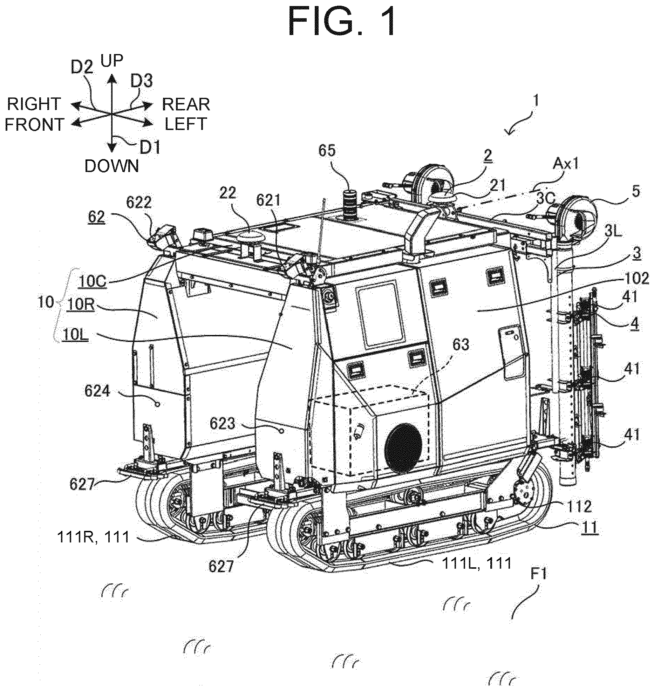

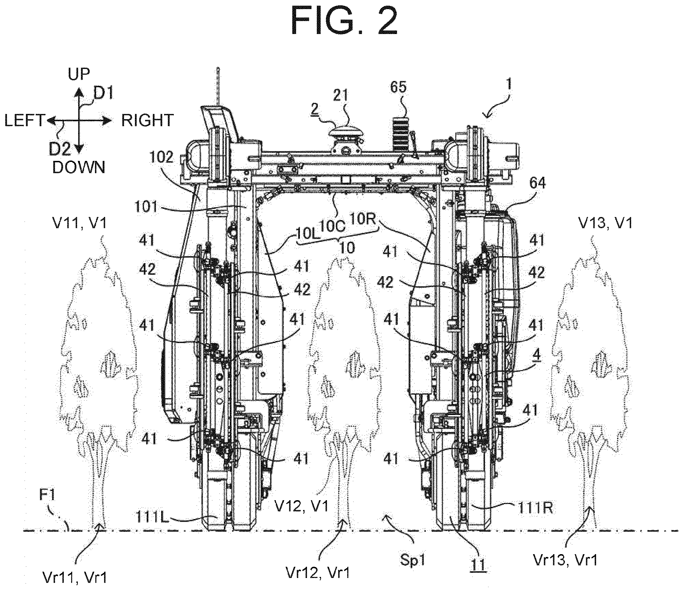

First, a description will be made on an overall configuration of a sprayer 1 according to the present embodiment with reference to FIG. 1 to FIG. 5. In the present embodiment, the sprayer 1 performs spraying work. In the spraying work, the sprayer 1 sprays a spray material such as a chemical solution, water, or a fertilizer on a crop V1 (see FIG. 2) that is grown in a field F1. This sprayer 1 is an example of the "work vehicle" that performs any of various works while traveling automatically along a target route in a work site such as the field F1.

That is, the sprayer 1 is a work machine that can perform, as the work, the spraying work to spray the spray material such as the chemical solution, water, or the fertilizer. Examples of the "work vehicle" described in the present disclosure include, in addition to the sprayer, a tractor, a rice transplanter, a spraying machine, a seeder, a transplanter, and a combine harvester. Furthermore, the "work vehicle" in the present disclosure is not limited to an agricultural machine (farm machinery) but may be a construction machine (construction equipment), for example.

The "field" in the present disclosure is an example of the work site where the sprayer 1, which is the work vehicle, performs any of various works such as the spraying work while moving. Examples of the "field" include, but are not limited to, an orchard, a pasture, a rice field, and a farm field, in each of which agricultural products are grown. In this case, the crop V1 grown in the field F1 is the agricultural product. Furthermore, in the case where garden trees are grown in a garden tree field, the garden tree field is the field F1. Like in forestry, in the case where trees to be used as lumber are grown in a forest, the forest is the field F1. In this case, the crop V1 that is grown in the field F1 is the garden tree, the tree, or the like. However, the work site where the work vehicle performs the work is not limited to the field F1 but may be a site other than the field F1. For example, in the case where the work vehicle is the construction machine, a site where the construction machine works is the work site.

In the present embodiment, as an example, the sprayer 1 is a vehicle that sprays the chemical solution on the crop V1 grown in the field F1 while moving in the field F1, and the field F1 is the orchard such as a vineyard or an apple orchard. In this case, the chemical solution is an example of the spray material. The crop V1 is an example of a spray target on which the spray material (the chemical solution) is sprayed. An example of the crop V1 is a grape tree. The crop V1, which is the spray target, is also an example of a work target to be worked by the sprayer 1, which is the work vehicle. The "chemical solution", which is the spray material described herein, is an agricultural chemical used for improved agricultural efficiency, preservation of the agricultural product, or any other purpose. Examples of the chemical solution include, but are not limited to, a herbicide, a fungicide, a mold inhibitor, an insecticide, a rodenticide, a growth promoter for the crop V1 and a germination inhibitor.

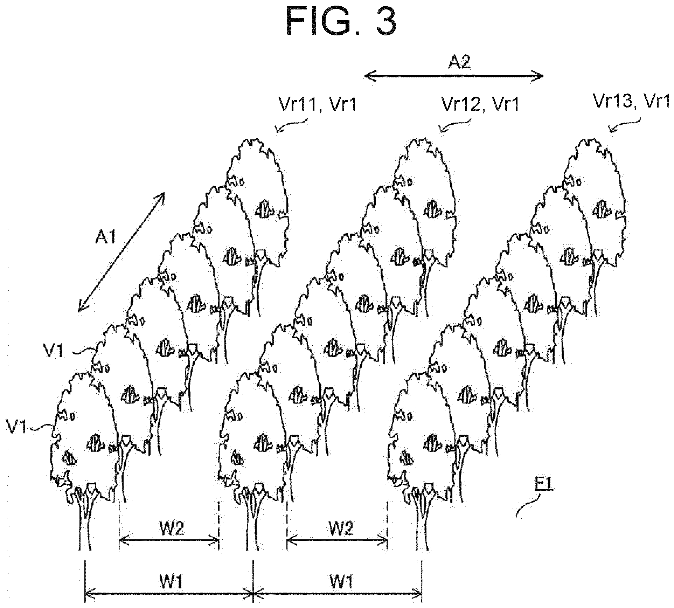

In the field F1, the crops V1 are arranged in plural rows at predetermined intervals. More specifically, as illustrated in FIG. 3, the crops V1 are planted in alignment in a length direction A1 in a plan view. The crops V1 that are aligned linearly in the length direction A1 form a crop row Vr1. FIG. 3 illustrates an example of the three crop rows Vr1, each of which includes the six crops V1 aligned in the length direction A1. The crop rows Vr1 are arranged at predetermined pitches W1 in a width direction A2. In this way, a work path is formed between the adjacent crop rows Vr1. The work path has a width W2 (< W1) that corresponds to an interval between the crop rows Vr1, and extends along the length direction A1. The sprayer 1 sprays the spray material (the chemical solution) on the crops V1 while moving (traveling) in the length direction A1 on this work path.

Although described in detail below, the sprayer 1 that travels in the field F1 includes a gate-shaped body 10. More specifically, the body 10 has: a first block 10L and a second block 10R that are aligned in a right-left direction D2; and a coupling section 10C that couples upper end portions of the first block 10L and the second block 10R. In this way, with the first block 10L, the second block 10R, and the coupling section 10C, the body 10 defines the gate shape that surrounds a left side, a right side, and an upper side of a space Sp1. That is, the space Sp1 is provided inside the body 10 and opened in a front-rear direction D3.

The sprayer 1 further includes a travel unit 11 with a pair of crawlers 111L, 111R that are aligned in the right-left direction D2. The paired crawlers 111L, 111R are provided below the first block 10L and the second block 10R, respectively, and located on both sides of the space Sp1 in the right-left direction D2.

As illustrated in FIG. 2, the sprayer 1 travels in a posture that the gate-shaped body 10 straddles the single crop row Vr1. During travel of the sprayer 1, the sprayer 1 can spray the spray material (the chemical solution) on the crops V1 in the straddled crop row Vr1 and the crops V1 in the adjacent crop rows Vr1 to the straddled row Vr1. In other words, the sprayer 1 can travel in a manner to allow the crop V1, which the spray target (the work object), to pass through the space Sp1 on the inside of the gate-shaped body 10. That is, as exemplified in FIG. 2, in the case where three crops rows Vr11, Vr12, Vr13 are aligned in the right-left direction D2, the sprayer 1 can travel such that the body 10 straddles any one of these three crops rows Vr11, Vr12, Vr13.

Here, in the case where the body 10 straddles the center crop row Vr12, the first block 10L travels on the work path between the left-end crop row Vr11 and the crop row Vr12, and the second block 10R travels on the work path between the right-end crop row Vr13 and the crop row Vr12. Then, the sprayer 1 can simultaneously spray the spray material (the chemical solution) on a crop V11 in the crop row Vr11, a crop V12 in the crop row Vr12, and a crop V13 in the crop row Vr13. Just as described, during travel, the sprayer 1 can simultaneously spray the spray material (the chemical solution) on the spray targets (the crops V1) in the three rows. Thus, the sprayer 1 according to the present embodiment exhibits higher spraying work efficiency than a sprayer that is configured to spray the spray material by each row.

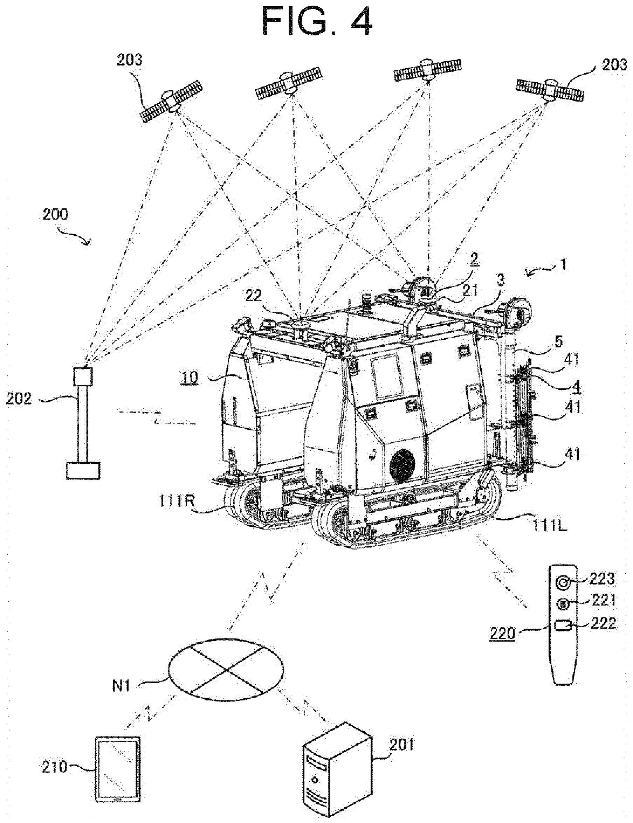

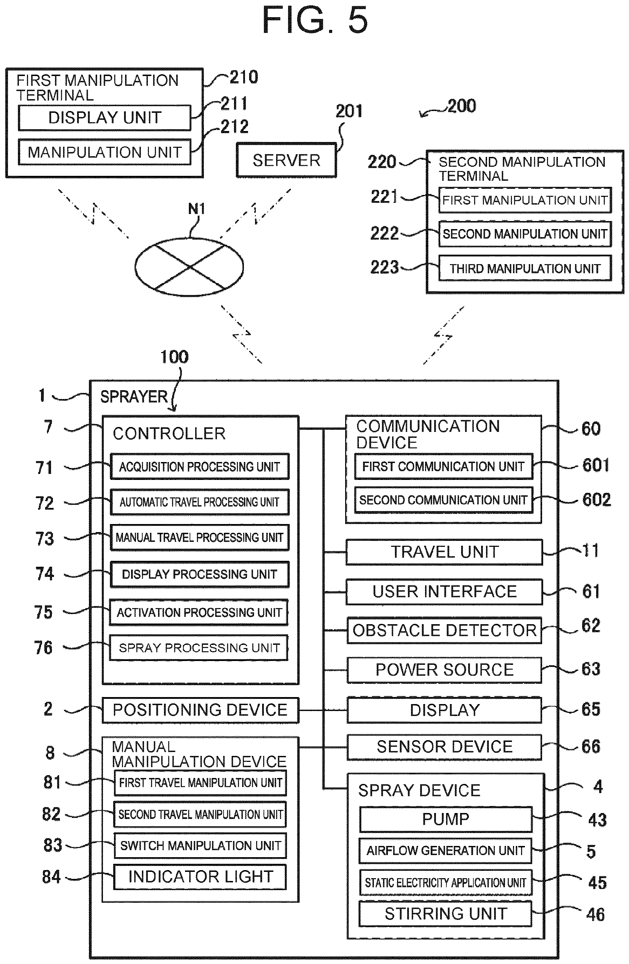

Furthermore, as an example in the present embodiment, the sprayer 1 is an unmanned machine that is operated by automatic driving and thus does not rely on manipulation (including remote manipulation) by a person (a manipulator). For this reason, as illustrated in FIG. 4 and FIG. 5, the sprayer 1 constitutes an automated work system 200 together with a first manipulation terminal 210, a second manipulation terminal 220, a server 201, a base station 202, and a satellite 203. In other words, the automated work system 200 includes the sprayer 1, the first manipulation terminal 210, the second manipulation terminal 220, the server 201, the base station 202, and the satellite 203. However, components of the automated work system 200 may not include at least one of the first manipulation terminal 210, the second manipulation terminal 220, the server 201, the base station 202, and the satellite 203. For example, the automated work system 200 may not include the server 201, the base station 202, and the satellite 203.

The sprayer 1, the first manipulation terminal 210, the second manipulation terminal 220, and the server 201 are mutually communicable. The term "communicable" in the present disclosure means that an appropriate communication method such as wired communication or wireless communication (communication using a radio wave or light as a medium) enables information exchange either directly or indirectly via a communication network (a network) N1, a relay, or the like. For example, the sprayer 1 and the first manipulation terminal 210 are mutually communicable via the communication network N1 such as the Internet, a local area network (LAN), a wide area network (WAN), a public telephone line, a mobile telephone network, a packet network, or a wireless LAN. Here, the sprayer 1 and the first manipulation terminal 210 are each wirelessly connected to the communication network N1. Thus, the communication between the sprayer 1 and the first manipulation terminal 210 at least includes the wireless communication. In addition, the sprayer 1 and the first manipulation terminal 210 are each wirelessly communicable with the server 201 via the communication network N1.

The satellite 203 is a positioning satellite that is a component of a satellite positioning system such as a global navigation satellite system (GNSS). The satellite 203 sends a GNSS signal (a satellite signal). The base station 202 is a reference point (a reference station) that constitutes the satellite positioning system. The base station 202 sends correction information to the sprayer 1, and the correction information is then used to calculate a current position and the like of the sprayer 1.

The sprayer 1 in the present embodiment includes a positioning device 2. The positioning device 2 detects a current position (a latitude, a longitude, an altitude, and the like), a current azimuth, and the like of the body 10. The positioning device 2 executes positioning processing by using the GNSS signal that is sent from the satellite 203. In the positioning processing, the positioning device 2 identifies (calculates) the current position, the current azimuth, and the like of the body 10. The positioning device 2 employs a high-accuracy positioning method such as real-time kinematic (RTK) positioning. In the RTK positioning method, the position and the like of the body 10 are measured on the basis of positioning information (the GNSS signal or the like) received by two receivers (the base station 202 and an antenna 21) and on the basis of the correction information generated by the base station 202.

The first manipulation terminal 210 is a general-purpose information processor that can be carried by the manipulator. Examples of the first manipulation terminal 210 include, but are not limited to, a smartphone and a tablet terminal. The first manipulation terminal 210 enables the remote manipulation of the sprayer 1 as follows. In response to the manipulator's manipulation, the first manipulation terminal 210 outputs (sends), to the sprayer 1, a stop instruction (a temporary stop instruction) that at least stops the automatic travel of the sprayer 1. Here, the first manipulation terminal 210 communicates wirelessly with the sprayer 1 via the communication network N1. Thus, as long as the first manipulation terminal 210 is in an environment where the first manipulation terminal 210 can be connected to (communicate with) the communication network N1, the first manipulation terminal 210 that is located away from the sprayer 1, that is, located remotely in the field F1, can control the sprayer 1.

As illustrated in FIG. 5, the first manipulation terminal 210 includes: a display unit 211 that displays various types of information; and a manipulation unit 212 that accepts manipulation. Examples of the display unit 221 include, but are not limited to, a liquid-crystal display and an organic EL display. Examples of the manipulation unit 212 include, but are not limited to, a touch panel, a physical switch, a mouse, and a keyboard. In the present embodiment, as an example, the display unit 211 having the liquid-crystal display and the manipulation unit 212 having the touch panel integrally constitute a touch panel display. Thus, when the manipulator manipulates the manipulation unit 212 in a manipulation screen that is displayed on the display unit 211, the manipulator can, for example, output the stop instruction (the temporary stop instruction) from the first manipulation terminal 210 to the sprayer 1.

Furthermore, the first manipulation terminal 210 has a function of setting (registering) various types of information on control of the sprayer 1. An example of the information on the control of the sprayer 1 is the target route for the automatic travel of the sprayer 1. That is, the manipulator can set the target route and the like by manipulating the manipulation unit 212 in the display screen that is displayed on the display unit 211. The information, such as the target route, that is set herein is sent to the sprayer 1 either directly or indirectly via the server 201 or the like. Then, the information is used for the automatic travel of the sprayer 1.

During the automatic travel of the sprayer 1, the first manipulation terminal 210 can display various types of information on operation of the sprayer 1 on the display unit 211. Examples of the information include, but are not limited to, the current position, the current azimuth, and a (spray) work status of the sprayer 1. For example, in the first manipulation terminal 210, the display unit 211 provides a monitoring screen that displays the target route, the current position, and the like of the sprayer 1 on a map simulating the field F1. This allows the manipulator to easily, visually comprehend a state of the sprayer 1. Here, for example, the monitoring screen preferably displays information on a remaining amount of the chemical solution that is the spray material, information on a fuel remaining amount, information on a battery remaining amount, and the like.

The second manipulation terminal 220 is a dedicated wireless communication terminal that can be carried by the manipulator. The second manipulation terminal 220 enables the remote manipulation of the sprayer 1 as follows. In response to the manipulator's manipulation, the second manipulation terminal 220 outputs (sends), to the sprayer 1, the stop instruction (the temporary stop instruction) that at least stops the automatic travel of the sprayer 1. Here, the second manipulation terminal 220 is communicable with the sprayer 1 by a different communication system from the communication system for the first manipulation terminal 210.

More specifically, the second manipulation terminal 220 directly, wirelessly communicates with the sprayer 1 without the communication network N1 being interposed therebetween. Thus, as long as the second manipulation terminal 220 is in an environment where the second manipulation terminal 220 can be connected to (communicate with) the sprayer 1, the second manipulation terminal 220 that is located away from the sprayer 1, that is, located remotely in the field F1, can manipulate the sprayer 1. However, a range where the second manipulation terminal 220 can be connected to the sprayer 1 is limited to a short-distance range where the position of the second manipulation terminal 220 from the sprayer 1 is closer than the position of the first manipulation terminal 210 from the sprayer 1. Examples of such a range include a range within the field F1 and a range around the field F1. Thus, as long as the manipulator is at a position where the manipulator can visually recognize the sprayer 1, the manipulator can basically control the sprayer 1 by manipulating the second manipulation terminal 220.

As illustrated in FIG. 4 and FIG. 5, the second manipulation terminal 220 includes a first manipulation unit 221, a second manipulation unit 222, and a third manipulation unit 223, each of which individually accepts manipulation. Examples of each of the first manipulation unit 221, the second manipulation unit 222, and the third manipulation unit 223 include, but are not limited to, a physical switch, a touch panel, a mouse, and a keyboard. In the present embodiment, as an example, each of the first manipulation unit 221, the second manipulation unit 222, and the third manipulation unit 223 is a momentary push button switch that is the physical switch (a mechanical switch). Thus, when the manipulator manipulates any one of the first manipulation unit 221, the second manipulation unit 222, and the third manipulation unit 223, the manipulator can output, for example, the stop instruction (the temporary stop instruction or an emergency stop instruction) from the second manipulation terminal 220 to the sprayer 1.

Here, different functions are assigned to the first manipulation unit 221, the second manipulation unit 222, and the third manipulation unit 223. For this reason, a type of the instruction to be output (sent) to the sprayer 1 by the second manipulation terminal 220 is determined by which of the first manipulation unit 221, the second manipulation unit 222, and the third manipulation unit 223 is pressed (manipulated) by the manipulator. More specifically, the "temporary stop" is assigned to the first manipulation unit 221, the "emergency stop" is assigned to the second manipulation unit 222, and the "travel start" is assigned to the third manipulation unit 223. Thus, for example, when the manipulator manipulates the first manipulation unit 221, the second manipulation terminal 220 outputs the temporary stop instruction that is one type of the stop instructions to stop the automatic travel of the sprayer 1.

As described above, in the present embodiment, the sprayer 1 can communicate wirelessly with the plural types of the manipulation terminals that at least includes the first manipulation terminal 210 and the second manipulation terminal 220, and the sprayer 1 is controlled according to the instruction from each of these plural types of the manipulation terminals. In other words, each of the first manipulation terminal 210 and the second manipulation terminal 220 constitutes a remote manipulation device (a remote controller) that enables the remote manipulation of the sprayer 1. Thus, the manipulator can stop, for example, the automatic travel of the sprayer 1 even when the manipulator is at the position away from the sprayer 1.

The server 201 is an information processor such as a server device. The server 201 sends the information to the sprayer 1, and the information includes, but is not limited to, information on the target route on which the sprayer 1 travels automatically.

In the present embodiment, as illustrated in FIG. 1, a vertical direction in a usable state of the sprayer 1 is defined as an up-down direction D1 for convenience of description. In addition, the right-left direction D2 and the front-rear direction D3 are each defined with a direction that is seen from a center point of the sprayer 1 in the plan view being a reference. That is, an advancing direction of the sprayer 1 during forward travel is the front in the front-rear direction D3, and the advancing direction of the sprayer 1 during reverse travel is the rear in the front-rear direction D3. However, these directions are not intended to limit a use direction (a direction in use) of the sprayer 1.

### [2] Details of sprayer

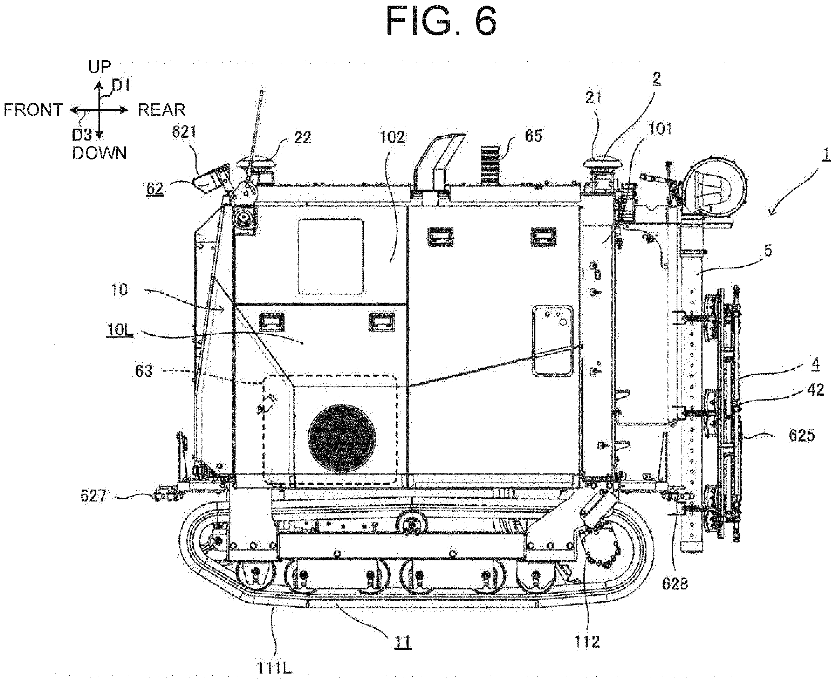

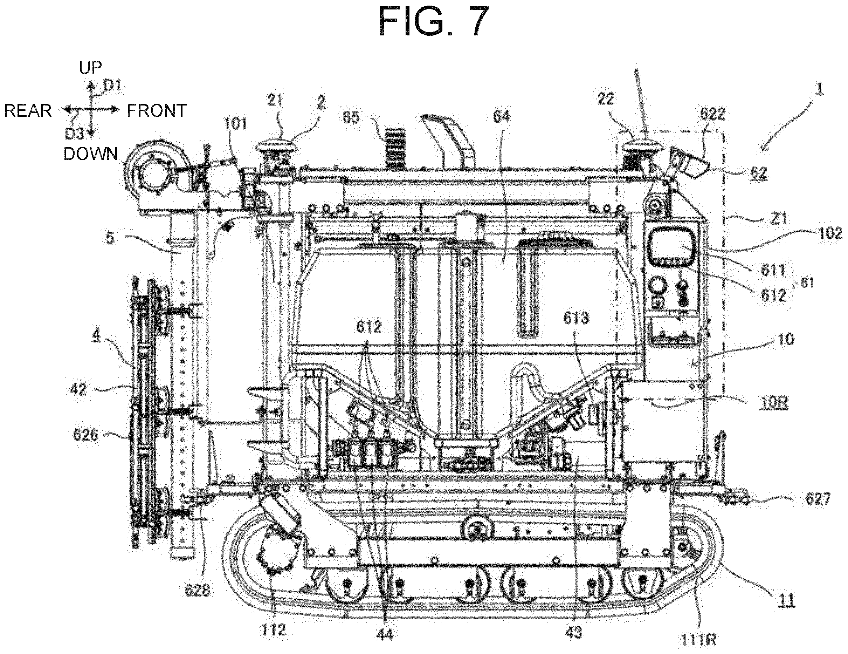

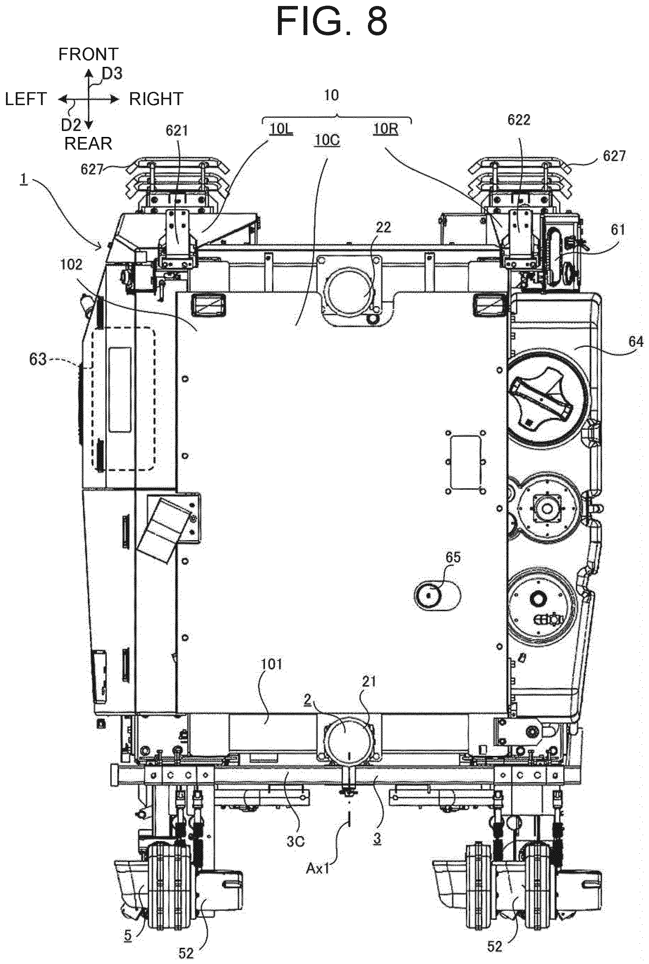

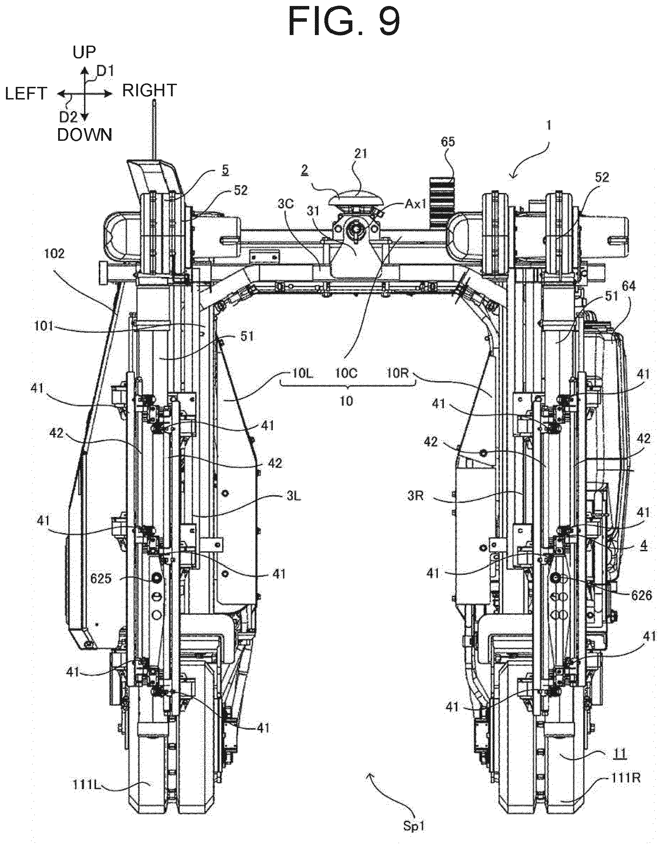

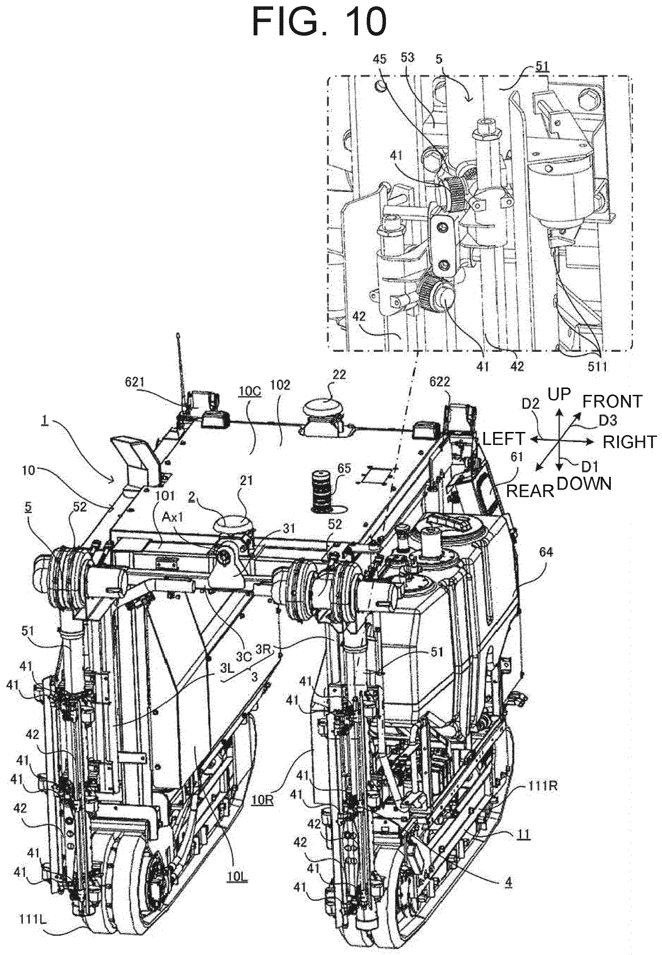

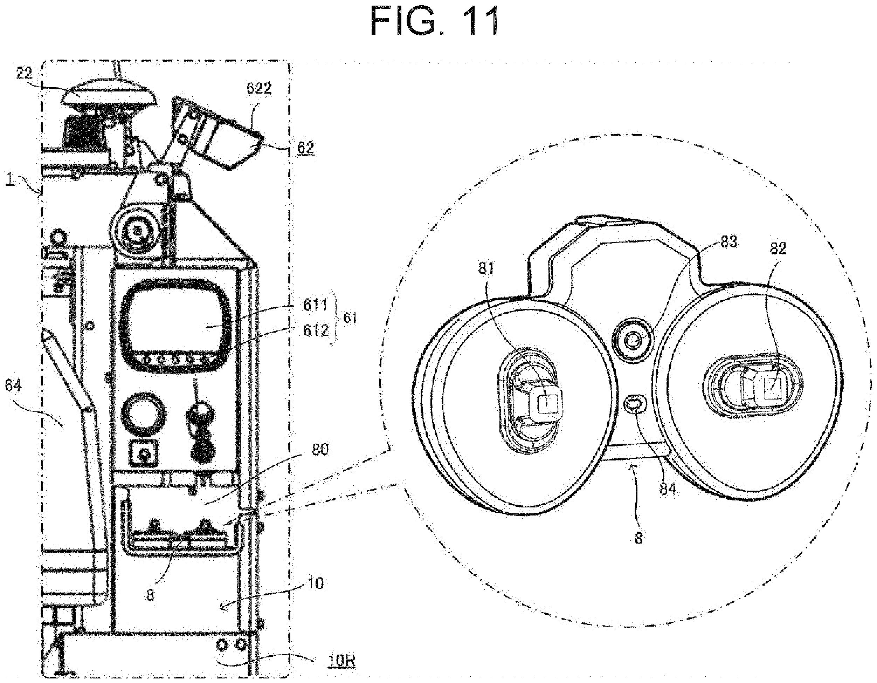

Next, a detailed description will be made on the configuration of the sprayer 1 with reference to FIG. 1, FIG. 2, and FIG. 5 to FIG. 11. FIG. 1 is an external appearance view in which the sprayer 1 is seen from the front left side. FIG. 2 is an external appearance view in which the sprayer 1 is seen from a back side (the rear side). FIG. 5 is a block diagram schematically illustrating the main configuration of the sprayer 1. FIG. 6 is an external appearance view in which the sprayer 1 is seen from the left side. FIG. 7 is an external appearance view in which the sprayer 1 is seen from the right side. FIG. 8 is an upper external appearance view in which the sprayer 1 is seen from above. FIG. 9 is a back external appearance view in which the sprayer 1 is seen from the back side (behind). FIG. 10 is a schematic view illustrating a state where the sprayer 1 is seen obliquely from behind, and provides a partial enlarged view of the sprayer 1 in a bubble. FIG. 11 is an enlarged view of an area Z1 in FIG. 7, and provides an external view of a manual manipulation device 8 in a bubble.

The sprayer 1 includes the body 10, the travel unit 11, a support frame 3, and a spray device 4. In the present embodiment, as illustrated in FIG. 5, the sprayer 1 further includes the positioning device 2, a controller 7, the manual manipulation device 8, a communication device 60, a user interface 61, an obstacle detector 62, a power source 63, a tank 64 (see FIG. 7), a display 65, a sensor device 66, and the like. Moreover, the sprayer 1 includes a fuel tank, a battery, and the like. In the present embodiment, a structure of the sprayer 1 including the body 10 and the support frame 3 is basically made of metal, and a material therefor is selected according to required strength, required weather resistivity, and the like. However, the structure of the sprayer 1 is not limited to the structure made of metal. A structure that is made of resin, wood, or the like may appropriately be used, for example.

The body 10 is a main body of the sprayer 1 and supports most of the components of the sprayer 1 including the positioning device 2, the support frame 3, and the like. The body 10 has a frame 101 (see FIG. 2) and a cover 102. The frame 101 is a member that constitutes framework of the body 10, and supports heavy objects such as the power source 63 and the tank 64. The cover 102 is a member that constitutes a contour of the body 10. The cover is attached to the frame 101 in a manner to at least cover a part of the frame 101 and some of the members mounted to the frame 101. In a part of a rear surface (a back surface) of the body 10 and a part of a right surface of the body 10, the frame 101 is not covered with the cover 102 and thus is exposed. The cover 102 is divided into plural parts. These plural parts are separately removable from the frame 101. Thus, for example, a part of the cover 102 that corresponds to one of the devices (the members) such as the power source 63 can only be detached. In this way, only one of the devices (the members) such as the power source 63 can be exposed.

As described above, the body 10 has the first block 10L and the second block 10R that aligned in the right-left direction D2. The first block 10L and the second block 10R oppose each other with a certain value or more of the interval being provided therebetween in the right-left direction. In the present embodiment, as an example, the first block 10L is located on the left side, and the second block 10R is located on the right side. Thus, the first block 10L constitutes a left portion of the body 10, and the second block 10R constitutes a right portion of the body 10. Furthermore, the body 10 has the coupling section 10C that couples the first block 10L and the second block 10R. In a front view (when seen from the front), the coupling section 10C is long in the right-left direction D2, and each of the first block 10L and the second block 10R is long in the up-down direction D1.

Here, the coupling section 10C couples the upper end portions of the first block 10L and the second block 10R. Thus, in other words, the first block 10L and the second block 10R are projected downward from both ends (in the right-left direction D2) of the coupling section 10C. As a result, the body 10 defines the gate shape with the first block 10L, the second block 10R, and the coupling section 10C. The gate-shaped body 10 is opened to both sides in the front-rear direction D3 and is opened downward. Then, the space Sp1 is provided inside the body 10. The space Sp1 is surrounded by the first block 10L, the second block 10R, and the coupling section 10C in three directions and is opened in the front-rear direction D3.

In short, as illustrated in FIG. 2, the body 10 provides the space Sp1 between the first block 10L and the second block 10R, and the crop V1 (the work object) to be worked (subjected to the spraying work) by the spray device 4 (a work unit) passes through the space Sp1. More specifically, the crop V1, which is the spray target, in a standard size is set as a reference. Then, a dimension of each part of the body 10 is set so that the space Sp1 having a greater height and a greater width than a height and a width of the crop V1 is provided. Thus, the body 10 can allow the crop V1 in the standard size to pass through the body 10 in a state where the body 10 straddles the crop V1 and the crop V1 keeps a distance of a predetermined value or greater from the body 10 to prevent contact therewith. While the crop V1 passes through the space Sp1, the first block 10L is located on the left side of the crop V1, the second block 10R is located on the right side of the crop V1, and the coupling section 10C is located above the crop V1.

In detail, in the present embodiment, the body 10 is configured to be substantially symmetrical in the right-left direction D2. Each of the first block 10L and the second block 10R is substantially formed in the same rectangular shape and the same size in the side view. Each of the first block 10L and the second block 10R has a shape that is flat in the right-left direction D2. Thus, the dimensions of the first block 10L and the second block 10R in the right-left direction D2 are the smallest of the dimensions in the up-down direction D1, the right-left direction D2, and the front-rear direction D3. In each of the first block 10L and the second block 10R, a portion above a center in the up-down direction D1 is tapered such that the dimension of the portion in the right-left direction D2 is reduced upward. In the plan view, the coupling section 10C is formed in a rectangular shape whose dimension in the right-left direction D2 is larger than a dimension in the front-rear direction D3. Thus, the dimension of the coupling section 10C in the up-down direction D1 is the smallest of the dimensions in the up-down direction D1, the right-left direction D2, and the front-rear direction D3.

As described above, the body 10 can be roughly divided into three portions (blocks) that are the first block 10L, the second block 10R, and the coupling section 10C. Each of the first block 10L, the second block 10R, and the coupling section 10C has the frame 101 and the cover 102. In other words, each of the first block 10L and the second block 10R has the frame 101 and the cover 102. Furthermore, most of the components of the sprayer 1 including the positioning device 2 and the support frame 3 are separately provided to the first block 10L, the second block 10R, and the coupling section 10C.

The travel unit 11 is a travel device (a vehicle body) that makes the sprayer 1 travel. The travel unit 11 is provided in a lower portion of the body 10. The travel unit 11 allows the body 10 to travel (and turn) on the ground. Thus, the body 10 can move in the right-left direction D2 and the front-rear direction D3 in the field F1. Since such a travel unit 11 is provided to the body 10, the sprayer 1 can perform the work (the spraying work) while moving in the field F1.

The travel unit 11 includes the pair of crawlers (crawler tracks) 111L, 111R that are aligned in the right-left direction D2 (see FIG. 1). The pair of crawlers 111L, 111R is arranged at a certain interval in the right-left direction D2. Between these paired crawlers 111L, 111R, the space Sp1 is formed in the manner to allow the crop V1, which is the spray target, to pass therethrough. That is, the left crawler 111L located on the left side of the space Sp1 opposes the right crawler 111R located on the right side of the space Sp1 with the space Sp1 being interposed therebetween. In the case where the left crawler 111L and the right crawler 111R are not particularly distinguished from each other, each of the crawlers 111L, 111R will also simply be referred to as the "crawler 111". The travel unit 11 also includes a motor 112 (see FIG. 1) that drives the crawler 111. That is, the travel unit 11 is a crawler-type (caterpillar-type) travel device, and drives the crawler 111 in an endless belt shape with the motor 112, so as to make the sprayer 1 travel.

Here, at least two of the motors 112 are provided in a manner to correspond to the paired crawlers 111L, 111R. The left motor 112 for driving the left crawler 111L and the right motor 112 for driving the right crawler 111R can each drive the respective crawler 111 separately. In the present embodiment, as an example, the motor 112 is a hydraulic motor (an hydraulic actuator). The motor 112 drives the crawler 111 when hydraulic oil is supplied from a hydraulic pump. With such a configuration, the body 10 can travel stably even below a rough road surface condition of the field F1.

Here, the crawler 111 and the motor 112 are provided below each of the first block 10L and the second block 10R. That is, the first block 10L has the left crawler 111L and the motor 112 that drives the crawler 111L. The second block 10R has the right crawler 111R and the motor 112 that drives the crawler 111R. In the present embodiment, the paired crawlers 111L, 111R are substantially asymmetrical in the right-left direction D2, and the paired motors 112 are substantially asymmetrical in the right-left direction D2. Just as described, the paired travel units 11 are separated from each other in the right-left direction D2 by the space Sp1. Thus, the sprayer 1 can travel while keeping a stable posture in any of the various road surface conditions of the field F1. An example of the road surface condition is a laterally inclined slope on which either side in the right-left direction D2 is lower than the other side.

Here, in a state where a hydrostatic continuously variable transmission can separately change speeds of the paired crawlers 111L, 111R, the paired crawlers 111L, 111R are driven with power from the power source 63. Consequently, when the pair of the crawlers 111L, 111R is driven at a constant speed in a forward travel direction, the body 10 is brought into a forward travel state where the body 10 travels straight in the forward travel direction. When the pair of the crawlers 111L, 111R is driven at a constant speed in a reverse travel direction, the body 10 is brought into a reverse travel state where the body 10 travels straight in the reverse travel direction. When the pair of the crawlers 111L, 111R is driven at a non-constant speed in the forward travel direction, the body 10 is brought into a forward turning state where the body 10 turns while traveling straight. When the pair of the crawlers 111L, 111R is driven at a non-constant speed in the reverse travel direction, the body 10 is brought into a reverse turning state where the body 10 turns while traveling reversely. Furthermore, in the case where one of the paired crawlers 111L, 111R is driven while the other is not driven, the body 10 is brought into a pivotal turning (pivotal brake turning) state. In the case where one of the paired crawlers 111L, 111R is driven at the constant speed in the forward travel direction while the other is driven at the constant speed in the reverse travel direction, the body 10 is brought into a spin turning (counter-rotation turning) state. Moreover, when driving of the paired crawlers 111L, 111R is stopped, the body 10 is brought into a travel stop state.

The power source 63 and the like are mounted to the first block 10L, and the tank 64 and the like are mounted to the second block 10R. The components of the sprayer 1 are separately arranged to the first block 10L and the second block 10R of the body 10, just as described. Thus, the sprayer 1 is balanced in the right-left direction D2 and has a low center of gravity. As a result, the sprayer 1 can travel stably on the slope or the like in the field F1.

As described above, the positioning device 2 is a device that detects the current position, the current azimuth, and the like of the body 10. The positioning device 2 at least has the antenna 21. The antenna 21 receives the GNSS signal or the like that is sent from the satellite 203. That is, the antenna 21 includes a position identification antenna for identifying the position of the body 10. Here, the antenna 21 is arranged on an upper surface (a top surface) of the body 10 so as to easily receive the signal (the GNSS signal) from the satellite 203. In other words, the antenna 21 is arranged at a higher position than the highest position in the body 10. Furthermore, the positioning device 2 includes a posture detection section and the like, and the posture detection section detects the posture of the body 10.

In the present embodiment, the positioning device 2 further has an antenna 22 as a second antenna in addition to the antenna 21 as a first antenna. The positioning device 2 receives the GNSS signal or the like from each of these two antennas 21, 22. Here, the antenna 22 (the second antenna) is arranged in alignment with the antenna 21 (the first antenna) in the front-rear direction D3. Thus, the positioning device 2 can send/receive the signal (the GNSS signal or the like) to/from each of the antennas 21, 22. In particular, in the case where the antennas 21, 22 are the position identification antennas, the current positions of the front portion and the rear portion of the body 10 can be identified. Thus, it is also possible to identify an orientation (the current azimuth) of the body 10.

The support frame 3 is a member that is attached to one end portion in the front-rear direction D3 of the body 10 and supports a spray nozzle 41 of the spray device 4, which will be described below. In the present embodiment, the support frame 3 is attached to a rear end portion of the body 10. Similar to the body 10, the support frame 3 has a gate shape. In a back view (when seen from the rear side), the support frame 3, is arranged at an overlapping position with the body 10. More specifically, the support frame 3 has: a vertical frame 3L (a first vertical frame) and a vertical frame 3R (a second vertical frame) that are arranged in alignment in the right-left direction D2; and a horizontal frame 3C that couples upper ends of the vertical frame 3L and the vertical frame 3R. In this way, with the vertical frame 3L, the vertical frame 3R, and the horizontal frame 3C the support frame 3 defines the gate shape that surrounds the left side, the right side, and the upper side of the space Sp1.

More specifically, the support frame 3 has the vertical frame 3L and the vertical frame 3R that are arranged in alignment in the right-left direction D2. The vertical frame 3L and the vertical frame 3R oppose each other at an interval of a certain value or more in the right-left direction D2. In the present embodiment, as an example, the vertical frame 3L is located on the left side, and the vertical frame 3R is located on the right side. Thus, the vertical frame 3L is located behind the first block 10L of the body 10, and the vertical frame 3R is located behind the second block 10R of the body 10. In the back view (when seen from the rear side), the horizontal frame 3C is long along the right-left direction D2, and each of the vertical frame 3L and the vertical frame 3R is long along the up-down direction D1.

Here, the horizontal frame 3C couples the upper ends of the vertical frame 3L and the vertical frame 3R. Thus, in other words, the vertical frame 3L and the vertical frame 3R are projected downward from both ends (in the right-left direction D2) of the horizontal frame 3C. Just as described, the support frame 3 has: the horizontal frame 3C that is long along the right-left direction D2; and the paired vertical frames 3L, 3R that are long along the up-down direction D1 and are projected downward from both the sides of the horizontal frame 3C. As a result, with the vertical frame 3L, the vertical frame 3R, and the horizontal frame 3C, the support frame 3 defines the gate shape that is opened to both the sides in the front-rear direction D3 and is opened downward. Then, the space Sp1 is provided on the inner side of the support frame 3. The space Sp1 is surrounded by the vertical frame 3L, the vertical frame 3R, and the horizontal frame 3C and is opened in the front-rear direction D3.

In short, as illustrated in FIG. 2, the support frame 3 provides the space Sp1 between the pair of the vertical frames 3L, 3R, and the crop V1 (the work object, the spray target) to be worked (subjected to the spraying work) by the spray device 4 (the work unit) passes through the space Sp1. More specifically, the crop V1, which is the spray target, in the standard size is set as the standard. Then, a dimension of each part of the support frame 3 is set in a manner to provide the space Sp1 with the greater height and the greater width than those of the crop V1. Thus, the support frame 3 can allow the crop V1 in the standard size to pass therethrough in a state where the support frame 3 straddles the crop V1 and the crop V1 keeps a distance of a predetermined value or longer from the support frame 3 to prevent contact therewith. While the crop V1 passes through the space Sp1, the vertical frame 3L is located on the left side of the crop V1, the vertical frame 3R is located on the right side of the crop V1, and the horizontal frame 3C is located above the crop V1.

In detail, in the present embodiment, the support frame 3 is configured to be substantially symmetrical in the right-left direction D2. Each of the vertical frame 3L and the vertical frame 3R has a cylindrical shape with a circular cross section. In the present embodiment, as an example, each of the vertical frame 3L and the vertical frame 3R is configured that two cylindrical members are arranged in parallel. The horizontal frame 3C has a square tubular shape with a rectangular cross section. Here, each of the vertical frame 3L and the vertical frame 3R is firmly fixed to the horizontal frame 3C by an appropriate fixing member/method such as a connection fitting, a brace fitting, or welding. Thus, each of the vertical frame 3L and the vertical frame 3R maintains an orthogonal state to the horizontal frame 3C. In other words, in the back view, a corner between the vertical frame 3L and the horizontal frame 3C and a corner between the vertical frame 3R and the horizontal frame 3C each define a right angle.

In the present embodiment, the support frame 3 is supported by the body 10 in a manner to be rotatable about a rotation axis Ax1 (see FIG. 8 and FIG. 9) while maintaining a relative positional relationship between the horizontal frame 3C and the pair of the vertical frames 3L, 3R. The rotational axis Ax1 is an axis that passes through a fulcrum section 31 provided to the horizontal frame 3C and extends along the front-rear direction D3. That is, the support frame 3 that supports the work unit (the spray nozzle 41) is supported by the body 10 in the manner to be rotatable about the rotation axis Ax1 along the front-rear direction D3. Here, the term "rotation axis" in the present disclosure means a virtual axis (a straight line) that serves as a center of rotational motion of a rotating body. In other words, the rotation axis Ax1 is an insubstantial virtual axis. However, the rotation axis Ax1 may be a substantial member such as a shaft pin.

The spray device 4 has the spray nozzle 41 and the like. The spray device 4 performs the spraying work to spray the chemical solution as the spray material stored in the tank 64 on the crop V1 as the spray target. The spray nozzle 41 is a portion that is supported by the support frame 3 and sprays the spray material. In the present embodiment, as an example, the spray nozzle 41 is a discharge port (a spay unit) that actually serves as an outlet of the spray material (the chemical solution). The spray device 4 has the plural (12 as an example in the present embodiment) spray nozzles 41.

The spray device 4 has, in addition to the spray nozzle 41, a spray pipe 42, a pump 43 (see FIG. 7), a valve 44 (see FIG. 7), spray piping, and the like. As illustrated in FIG. 5, the spray device 4 further has an airflow generation unit 5, a static electricity application unit 45, and a stirring unit 46. The pump 43 has a function to spray the spray material (chemical solution) from the spray nozzle 41. The airflow generation unit 5 has a function to generate an airflow and thereby convey the spray material to be sprayed from the spray nozzle 41. The static electricity application unit 45 has a function to charge the spray material to be sprayed from the spray nozzle 41. The stirring unit 46 has a function to stir the chemical solution as the spray material stored in the tank 64. Just as described, the spray device 4 includes a plurality of functional units (the pump 43, the airflow generation unit 5, the static electricity application unit 45, the stirring unit 46, and the like) having the different functions. These plural functional units can be controlled by each functional unit.

The spray nozzle 41 is an example of the work unit that performs the work (the spraying work), and is supported by the support frame 3. Since the support frame 3 is supported by the body 10, the spray nozzle 41 (the work unit) is indirectly supported by the body 10. In the present embodiment, the spray nozzle 41 is attached to the spray pipe 42. The spray piping connects the spray pipe 42 to the pump 43 via the valve 44. The pump 43 pressure-feeds the spray material (the chemical solution) stored in the tank 64 to the spray pipe 42. The valve 44 is an electronically-controlled valve unit such as an electromagnetic valve and changes a pressure (a spraying pressure), a spray pattern, and the like at the time of spraying the spray material. As a result, the chemical solution in the tank 64 is supplied to the spray nozzle 41 via the valve 44 and the spray pipe 42 by the pump 43, and is sprayed from the spray nozzle 41. Here, the atomized chemical solution is discharged (sprayed) from the spray nozzle 41.

In detail, as illustrated in FIG. 9 and FIG. 10, the spray pipe 42 is piping that is long in the up-down direction D1, and the two spray pipes 42 are attached to each of the vertical frame 3L and the vertical frame 3R of the support frame 3. That is, in the present embodiment, the spray device 4 has a total of four spray pipes 42. The two (paired) spray pipes 42 that are attached to each of the vertical frame 3L and the vertical frame 3R are arranged in alignment in the right-left direction D2. The chemical solution as the spray material that is poured into each of the spray pipes 42 from an upper end thereof flows downward through the respective spray pipe 42 and is discharged from either one of the three spray nozzles 41. The three spray nozzles 41 are attached to each of the spray pipes 42. Thus, the spray device 4 has a total of the 12 spray nozzles 41.

Each of the spray nozzles 41 is attached to the corresponding spray pipe 42 such that a position of the respective spray nozzle 41 can be changed in the up-down direction D1. Thus, it is possible to change an interval between the adjacent spray nozzles 41 and a height position of each of the spray nozzles 41 with respect to the spray pipe 42 according to the spray object (the crop V1). In addition, each of the spray nozzles 41 is attached such that the position thereof in the up-down direction D1 with respect to the body 10, the position thereof in the right-left direction D2 with respect to the body 10, and an orientation (an angle) thereof can be changed according to the spray target. However, in the spray device 4, the number of the spray nozzles 41 that are provided to each of the spray pipes 42, and the like can appropriately be changed according to the type of the spray target (the crop V1), a length of each of the spray pipes 42, and the like.

The airflow generation unit 5 generates the airflow that conveys the spray material (the chemical solution) discharged from the spray nozzle 41. The airflow generation unit 5 is supported by the support frame 3 together with the spray nozzle 41. That is, the sprayer 1 according to the present embodiment is an air-assisted sprayer that sprays the spray material (the chemical solution) by using the airflow generated in the airflow generation unit 5. As a result, the sprayer 1 can efficiently spray the spray material (the chemical solution) even on the spray target (the crop V1) at a position relatively away from the spray nozzle 41.

The airflow generation unit 5 includes a duct 51 and a blower 52. The duct 51 forms a flow path through which air flows along the up-down direction D1. The blower 52 causes air to flow through the duct 51. In the airflow generation unit 5, the air that is blown out of a blowout hole 511 (see FIG. 10) formed in the duct 51 produces the airflow. In short, in the airflow generation unit 5, the air is flowed toward the duct 51 by the blower 52, is flowed through the flow path in the duct 51, and is then blown out of the blowout hole 511. In this way, a flow of the air (the airflow) that flows outward from the blowout hole 511 is generated. With such a configuration, it is possible to generate the stable airflow over a relatively wide range. Furthermore, the airflow generation unit 5 can adjust a flow rate of the airflow by controlling the blower 52. The airflow generation unit 5 can adjust a conveyance distance of the spray material by adjusting the flow rate, and can convey the spray material farther as the flow rate is increased. Thus, in the sprayer 1 according to the present embodiment, it is possible to adjust a spraying range of the spray material by the spray device 4.

In further detail, the duct 51 is a pipe that is long in the up-down direction D1, and one each of the ducts 51 is attached to the vertical frame 3L and the vertical frame 3R of the support frame 3. That is, in the present embodiment, the airflow generation unit 5 has a total of the two ducts 51. Each of the ducts 51 is formed with a plurality of the blowout holes 511 on a left surface of the respective duct 51 in alignment along the up-down direction D1. Furthermore, at a position behind each of the ducts 51, the two spray pipes 42 of the spray device 4 are fixed to the respective duct 51.

Here, two sets of the duct 51, the two spray pipes 42 attached thereto, and a total of the six spray nozzles 41 attached to these two spray pipes 42 are provided, and these sets are arranged symmetrically in the right-left direction D2. The three spray nozzles 41 that are provided to the left spray pipe 42 of the two spray pipes 42 each discharge the spray material (the chemical solution) toward the front left side, and the three spray nozzles 41 that are provided to the right spray pipe 42 each discharge the spray material (the chemical solution) toward the front right side. Thus, the misty spray material that is discharged from each of the left spray nozzles 41 is conveyed leftward by the airflow that is blown leftward from the duct 51, and the misty spray material that is discharged from each of the right spray nozzles 41 is conveyed rightward by the airflow that is blown rightward from the duct 51.

As a result, of the plural (12) spray nozzles 41, the three spray nozzles 41 provided to the leftmost spray pipe 42 each spray the chemical solution leftward toward the crop V1 that is located on the outer left side of the body 10. Of the plurality of the spray nozzles 41, the three spray nozzles 41 provided to the spray pipe 42 that is adjacent to the leftmost spray pipe 42 and is located on the inner left side each spray the chemical solution rightward toward the crop V1 that is located in the space Sp1 on the inner side of the body 10. Of the plurality of the spray nozzles 41, the three spray nozzles 41 provided to the rightmost spray pipe 42 each spray the chemical solution rightward toward the crop V1 that is located on the outer right side of the body 10. Of the plurality of the spray nozzles 41, the three spray nozzles 41 provided to the spray pipe 42 that is adjacent to the rightmost spray pipe 42 and is located on the inner right side each spray the chemical solution leftward toward the crop V1 that is located in the space Sp1 on the inner side of the body 10.

With the above configuration, in the spray device 4, a set of the two spray pipes 42 and the six spray nozzles 41 that is provided to the vertical frame 3L of the support frame 3 functions as a left spray unit. Meanwhile, a set of the two spray pipes 42 and the six spray nozzles 41 that is provided to the vertical frame 3R of the support frame 3 functions as a right spray unit. A right and left pair of the spray units is arranged behind the body 10 in a manner to enable spraying in the right-left direction D2. The right and left pair of the spray units is also arranged with a clearance (the space Sp1) allowing the crop V1 to pass through being interposed therebetween.

In the spray device 4, the plural (12) spray nozzles 41 are divided into plural systems, and each of the plural systems can be controlled independently. In the present embodiment, as an example, the six spray nozzles 41 that are provided to the two inner spray pipes 42 in the right-left direction D2 of the four spray pipes 42 are classified as a first system. The three spray nozzles 41 that are provided to the leftmost spray pipe 42 are classified as a second system. The three spray nozzles 41 that are provided to the rightmost spray pipe 42 are classified as a third system. Just as described, the spray device 4 has the plural spray nozzles 41 that are divided into the plural systems (the first system, the second system, the third system, and the like). The spray nozzles 41 in these systems can be controlled separately for each of the systems.

Thus, the spray patterns available for the spray device 4 include a full spray pattern in which all the spray nozzles 41 spray the spray material (the chemical solution) and a limited spray pattern in which a spray direction is limited. The limited spray patterns include: a first spray pattern in which only the six spray nozzles 41 in the first system sprays the spray material (the chemical solution); a second spray pattern in which only the three spray nozzles 41 in the second system sprays the spray material (the chemical solution); and a third spray pattern in which only the three spray nozzles 41 in the third system sprays the spray material (the chemical solution). The limited spray patterns further include: a fourth spray pattern in which only the nine spray nozzles 41 in the first and second systems spray the spray material (the chemical solution); a fifth spray pattern in which only the nine spray nozzles 41 in the first and third systems spray the spray material (the chemical solution); and the sixth spray pattern in which only the six spray nozzles 41 in the second system and the third system spray the spray material (the chemical solution).

The spray device 4 is controlled by the controller 7, and the spray pattern of the spray device 4 is thereby appropriately switched among the above-described spray patterns (a total of seven patterns including the full pattern and the six limited spray patterns). In the spray device 4, the valve 44 is at least provided for each system of the spray nozzles 41. In the present embodiment, the three valves 44 are provided so as to correspond to the three systems (the first system, the second system, and the third system). Each of these plural (three) valves 44 is controlled individually by the controller 7 to change the spray pattern. In addition, the spraying range of the spray material by the spray device 4 can be changed by changing, for each of the systems, a pressure at which the spray material is sprayed. Furthermore, in the present embodiment, the spraying range of the spray material can also be changed by adjustment of the flow rate produced by the airflow generation unit 5. This configuration can provide even more variety of the spraying ranges than the related art according to the spray target (the crop V1) or the spray material (the chemical solution).

The static electricity application unit 45 electrically charges the spray material (the chemical solution) to be sprayed from the plural spray nozzles 41. That is, the sprayer 1 according to the present embodiment is a sprayer of a static electricity application type. The sprayer of the static electricity application type performs "electrostatic spraying" that is the spraying work when the static electricity application unit 45 electrically charges the spray material (the chemical solution) that is sprayed from the spray nozzle 41 of the spray device 4. This configuration improves an adhesion rate of the spray material that adheres to the spray target (the crop V1) when compared to normal spraying with the spray material (the chemical solution) that is not electrically charged. As a result, the sprayer 1 can efficiently spray the spray material on the spray target (the crop V1) while minimizing a consumed amount of the spray material (the chemical solution).

The static electricity application unit 45 applies voltage (for example, a high voltage of about several kV) to loads including an electrode and the spray nozzle 41. In this way, the static electricity application unit 45 electrically charges the spray material. The electrode is arranged in a manner to oppose the spray nozzle 41 with a clearance being interposed therebetween. In the present embodiment, as an example, a pair of the electrodes is arranged for each of the spray nozzles 41. In the plan view, one of the paired electrodes is arranged on one side of the spray nozzle 41, and the other of the paired electrodes is arranged on the other side of the spray nozzle 41. The static electricity application unit 45 applies the voltage between the conductive spray nozzle 41 and the electrode. In this way, the static electricity application unit 45 electrically charges the spray material (the chemical solution) that is sprayed (discharged) from the spray nozzle 41. A magnitude of the voltage that is applied by the static electricity application unit 45 is appropriately set, for example, according to shapes of the spray nozzle 41 and the electrode or according to a distance between the spray nozzle 41 and the electrode.

The stirring unit 46 stirs the spray material (the chemical solution) in the tank 64. The stirring unit 46 is controlled by the controller 7. Basically, the stirring unit 46 starts stirring upon start of an engine (the power source 63), and continues stirring until stop of the engine (the power source 63). More specifically, a blade member is arranged in the tank 64 and rotationally driven by an electric motor (a motor). Consequently, the stirring unit 46 stirs the chemical solution in the tank 64. The stirring unit 46 drives the electric motor at a preset rotation speed (a rotation frequency).

In the case where a chemical agent and a liquid that are contained in the chemical solution stored in the tank 64 are not sufficiently mixed, for example, concentration of the chemical solution becomes uneven, or the spray nozzle 41 is clogged easily. This may lead to reduction in work accuracy of the sprayer 1. To solve the above problem, in the sprayer according to the present embodiment, the chemical solution in the tank 64 is basically stirred by the stirring unit 46. Thus, the chemical agent and the liquid contained in the chemical solution are mixed well, and this can improve the work accuracy of the sprayer 1.

In the present embodiment, as described above, the support frame 3 is not fixed relative to the body 10 but is rotatable about the rotation axis Ax1. With the rotation of the support frame 3, each of the plural spray nozzles 41 supported by the support frame 3 also rotates about the rotation axis Ax1.

The sprayer 1 according to the present embodiment does not include an actuator or the like that actively rotates the support frame 3. Thus, the support frame 3 rotates only after an external force acts on the support frame 3. For example, when the body 10 travels on the laterally inclined slope, the support frame 3 rotates by own weight, that is, gravity acting on the support frame 3. Here, in the case where the support frame 3 and members (the spray nozzle 41, the spray pipe 42, the airflow generation unit 5, and the like) supported by the support frame 3 have symmetrical weight balance in the right-left direction D2, the support frame 3 is maintained at a neutral position as long as the body 10 is maintained horizontally.

When the rotatable support frame 3 as described so far rotates, for example, during travel of the body 10 on the laterally inclined slope, the spray material (the chemical solution) is unlikely to be sprayed in an uneven amount (sprayed unevenly) by the spray nozzle 41. In summary, in the case where the support frame 3 is fixedly supported by the body 10, the body 10 is inclined during the travel on the laterally inclined slope. In this case, a distance of an upper portion of the crop V1 (the spray target) that extends straight in the vertical direction from the ground (the field F1) from the spray nozzle 41 differs from a distance of a lower portion of the crop V1 from the spray nozzle 41. This may lead to the uneven spray amount of the spray material. To solve the above problem, in the sprayer 1 according to the present embodiment, the support frame 3 is rotated. Thus, the support frame 3, the spray nozzle 41 supported by the support frame 3, and the like can each keep the same posture as the posture during travel on a horizontal surface. Accordingly, the distance of the upper portion of the crop V1 (the spray target) that extends straight in the vertical direction from the ground (the field F1) from the spray nozzle 41 is less likely to vary from the distance of the lower portion of the crop V1 (the spray target) from the spray nozzle 41. Thus, the unevenness of the spray amount of the spray material is easily eliminated or minimized.

As illustrated in FIG. 5, the communication device 60 has a first communication unit 601 and a second communication unit 602. The first communication unit 601 and the second communication unit 602 are communication interfaces, each of which can be operated individually. The first communication unit 601 and the second communication unit 602 use mutually different communication protocols for data communication with external devices such as the server 201, the first manipulation terminal 210, and the second manipulation terminal 220 according to the predetermined communication protocols. That is, the communication device 60 enables communication in plural communication channels (frequency bands or the like), including the communication by the first communication unit 601 and the communication by the second communication unit 602.

As an example, the first communication unit 601 employs the wireless communication to exchange a large amount of data such as image data at a high speed. In the wireless communication, a radio wave in a 2. 4 GHz band that conforms with the Wi-Fi^{®} standard is used as a communication medium, for example. The first communication unit 601 can be connected to the communication network N1 by the wireless communication. Thus, the first communication unit 601 can communicate with the first manipulation terminals 210, the server 201, and the like via the communication network N1. Here, the first communication unit 601 enables bidirectional communication at least with the first manipulation terminal 210, the server 201, and the like.

The second communication unit 602 employs the following wireless communication to exchange a smaller amount of data than the data exchanged by the first communication unit 601. In the wireless communication, the radio wave in a 400 MHz band or the radio wave in a 920 MHz band is used as a communication medium, and such a radio wave conforms with, for example, a low power radio (specific low power radio) standard that does not require a license. The second communication unit 602 can be connected to the second manipulation terminal 220 by the wireless communication. Thus, the second communication unit 602 can directly communicate with the second manipulation terminal 220. Here, the second communication unit 602 enables the bidirectional communication at least with the second manipulation terminal 220.

The user interface 61 is a device that outputs information to a user and/or accepts the user's manipulation. As illustrated in FIG. 7, the user interface 61 has: a display unit 611 such as a liquid-crystal display or an organic EL display that displays various types of information; a manipulation unit 612 such as a touch panel, a knob, or a push button switch that accepts manipulation. The manipulator who is an example of the user can make various settings by manipulating the manipulation unit 612 according to the manipulation screen that is displayed on the display unit 611. More specifically, the manipulator manipulates the manipulation unit 612 of the user interface 61 to set an operating condition of the spray device 4, and the like. Examples of the operating condition for the spray device 4 include, but are not limited to, the pressure (a jet pressure) and the flow rate of the spray material at the time of being sprayed from the spray nozzle 41.

The obstacle detector 62 includes a first sensor 621, a second sensor 622, a third sensor 623, and a fourth sensor 624. Each of the first sensor 621 to the fourth sensor 624 is arranged to face the front of the body 10. The first sensor 621 is arranged at a front left end of the upper surface of the body 10, the second sensor 622 is arranged at a front right end of the upper surface of the body 10, the third sensor 623 is arranged to a front surface of the first block 10L, and the fourth sensor 624 is arranged to a front surface of the second block 10R. The obstacle detector 62 further includes a fifth sensor 625 (see FIG. 6) and a sixth sensor 626 (see FIG. 7). Each of the fifth sensor 625 and the sixth sensor 626 is arranged to face the rear of the body 10. The fifth sensor 625 is mounted to the vertical frame 3L, and the sixth sensor 626 is mounted to the vertical frame 3R.

Each of the first sensor 621 to the sixth sensor 626 includes a sensor such as an image sensor (a camera), a sonar sensor, a radar, or Light Detection and Ranging (LiDAR), and detects a condition around the body 10. In the present embodiment, as an example, each of the first sensor 621 to the sixth sensor 626 is a three-dimensional sensor. The three-dimensional sensor measures a distance to each distance-measuring point (a measurement target) in a measurement range by employing a Time Of Flight (TOF) method. In the TOF method, the distance to the distance-measuring point is measured on the basis of a round-trip time of light or sound to the distance-measuring point. Examples of the surrounding condition of the body 10 include, but are not limited to, presence or absence of an object (an obstacle or the like) ahead in the advancing direction of the body 10 and the position (the distance and the azimuth) of the object.

The obstacle detector 62 further includes a front contact sensor 627 and a rear contact sensor 628. A right and left pair of the front contact sensors 627 is arranged on the front side of the body 10, and a right and left pair of the rear contact sensors 628 is arranged on the rear side of the body 10. Each of the front contact sensor 627 and the rear contact sensor 628 detects the obstacle when contacting the obstacle. Each of the sensors sends a detection signal to the controller 7 when detecting the obstacle.

The power source 63 is a drive source that supplies the power at least to the travel unit 11. The power source 63 has the engine such as a diesel engine. The power source 63 drives the hydraulic pump to supply the hydraulic oil from the hydraulic pump to the motor 112 of the travel unit 11, and the like. The power source 63 thereby drives the travel unit 11 and the like. Electronic devices such as the positioning device 2, the controller 7, and the communication device 60 are connected to the battery. Thus, these electronic devices can be operated even when the power source 63 is stopped.

The tank 64 stores the spray material such as the chemical solution. The spray material that is stored in the tank 64 is supplied to the spray device 4 and is then sprayed from the spray nozzle 41 of the spray device 4. The tank 64 can be replenished with the chemical solution, which is the spray material, from the outside. A volume of the tank 64 is approximately 200L, for example.

The display 65 is arranged on the upper surface of the body 10. As an example, the display 65 is formed in a columnar shape that is long in the up-down direction D1. A lighting state of the display 65 varies according to an operating state (a travel state, the spraying work performing state, or the like) of the sprayer 1. Thus, the operating state of the sprayer 1 can be recognized visually from the surrounding of the sprayer 1.

The sensor device 66 includes a remaining amount sensor that detects the remaining amount of the chemical solution, which is the spray material, and the fuel remaining amount, for example. As an example, the sensor device 66 detects the remaining amount of the chemical solution from an amount of the chemical solution in the tank 64. Similarly, the sensor device 66 detects the fuel remaining amount from an amount of the fuel in the fuel tank.

The controller 7 is mainly configured to be a computer system that has, for example, one or more processors such as a central processing unit (CPU) and one or more types of memory such as read only memory (ROM) or random access memory (RAM). The controller 7 executes various types of processing (information processing). In the present embodiment, the controller 7 is an integrated controller that controls the entire sprayer 1. The controller 7 includes an electronic control unit (ECU), for example. However, the controller 7 may be provided separately from the integrated controller. The controller 7 may include the single processor or the plural processors as the main components.

As illustrated in FIG. 5, the controller 7 includes an acquisition processing unit 71, an automatic travel processing unit 72, a manual travel processing unit 73, a display processing unit 74, an activation processing unit 75, and a spray processing unit 76. In the present embodiment, as an example, the controller 7 is mainly configured to be the computer system that has the one or more processors. Thus, when the one or more processors in the controller 7 execute a control program, these plural functional units (the acquisition processing unit 71 and the like) are implemented. These plural functional units that are included in the controller 7 may separately be provided in plural casings or may be provided in a single casing.

The controller 7 can communicate with the devices that are provided in the various parts of the body 10. More specifically, at least the travel unit 11, the positioning device 2, the spray device 4, the communication device 60, the user interface 61, the obstacle detector 62, the power source 63, and the display 65 are connected to the controller 7. Thus, the controller 7 can control the travel unit 11, the spray device 4, and the like and can acquire the electric signals from the positioning device 2, the communication device 60, the obstacle detector 62, and the like. The controller 7 may exchange the various types of the information (the data) with each of the devices either directly or indirectly via a relay or the like.

The controller 7 includes, in addition to the above functional units, an engine control unit, a hydro-static transmission (HST) control unit that executes control for the hydrostatic continuously variable transmission, and the like. The engine control unit executes control for the engine (the power source 63). The HST control unit executes control for the hydrostatic continuously variable transmission.

The acquisition processing unit 71 executes acquisition processing to acquire the electric signal (including the data) from each of the devices. In the present embodiment, the acquisition processing unit 71 acquires a manipulation signal such as the stop instruction at least from the first manipulation terminal 210 and the second manipulation terminal 220. The acquisition processing unit 71 further acquires the manipulation signal from the manual manipulation device 8, which will be described below. In this way, with the acquisition processing unit 71, the controller 7 can acquire the manipulation signals that correspond to the manipulation of the first manipulation terminal 210, the second manipulation terminal 220, and the manual manipulation device 8, for example. Moreover, the acquisition processing unit 71 acquires the information (the data) such as the remaining amount of the chemical solution, which is the spray material, and the fuel remaining amount from the sensor device 66.

The automatic travel processing unit 72 causes the body 10 to travel automatically along the target route in the field F1 on the basis of the positioning information that is acquired from the positioning device 2, and the like. More specifically, the automatic travel processing unit 72 causes the travel unit 11 to travel automatically along the target route on the basis of the positioning information that includes the position and the orientation of the body 10 measured by the positioning device 2. For example, when the RTK positioning of the positioning information is ready, the manipulator presses (for example, presses and holds) the third manipulation unit 223 of the second manipulation terminal 220. Then, the second manipulation terminal 220 outputs a travel start instruction (a work start instruction) to the sprayer 1. Once the automatic travel processing unit 72 acquires the travel start instruction from the second manipulation terminal 220, the automatic travel processing unit 72 starts the automatic travel of the sprayer 1 on the basis of the positioning information of the body 10 that is positioned by the positioning device 2. As a result, the sprayer 1 starts traveling automatically along the target route, the spray device 4 starts the spraying work.

The manual travel processing unit 73 executes travel control processing. In the travel control processing, the travel unit 11 is controlled according to the manipulation signal that is output from the manual manipulation device 8 and is acquired by the acquisition processing unit 71. That is, by controlling the travel unit 11 with the manual travel processing unit 73, the controller 7 can control the travel unit 11, that is, can allow the manual driving of the travel unit 11 according to the manipulation of the manual manipulation device 8 by the manipulator.

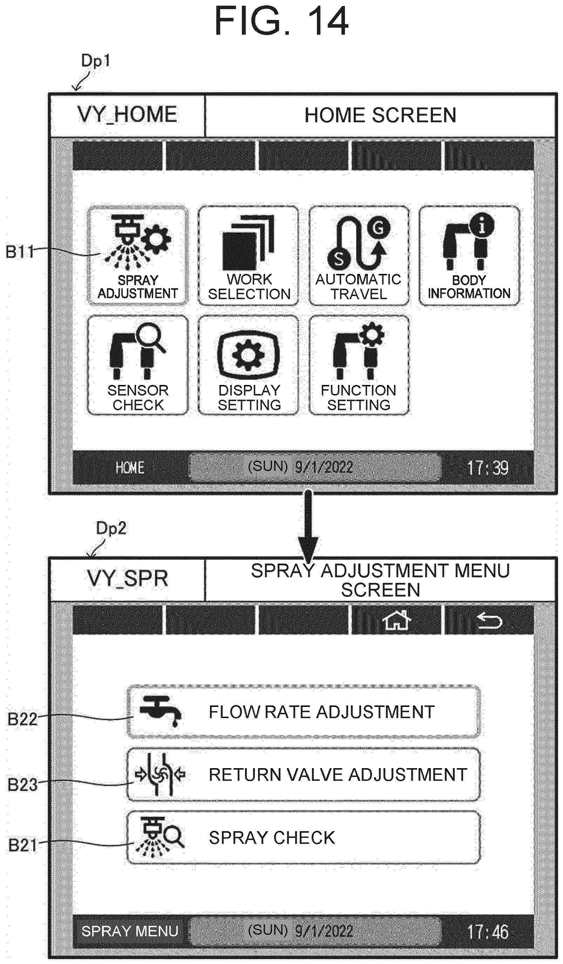

The display processing unit 74 executes display processing. In the display processing, for example, the display unit 611 of the user interface 61 that is mounted to the body 10 provides various displays associated with the sprayer 1. As an example, the display processing unit 74 causes the display unit 611 to display a display screen such as a home screen Dp1 (see FIG. 14).

The "screen" such as the home screen Dp1 in the present disclosure means a video (an image) displayed on the display unit 611 or the like. Examples of the "screen" include, but are not limited to, a graphic image, a figure, a photograph, text, and a moving image. That is, the display processing unit 74 can cause the display unit 611 to display a display screen that includes, for example, a graphic image representing the information on the operation of the sprayer 1. Here, in the case where the display screen includes a moving image or the like, the display screen does not include a certain video shot but includes a video that changes at every moment. The display processing unit 74 may display the display screen, for example, on the display unit 211 of the first manipulation terminal 210.

The activation processing unit 75 executes activation processing. In the activation processing, for example, the spray device 4, the display 65, a sound output unit, and the like are operated in conjunction with activation of the sprayer 1. That is, for example, the activation processing unit 75 can start automatic operation of the spray device 4, and the like at activation timing of the sprayer 1 such as power-on timing of the sprayer 1 or engine (the power source 63) start timing.

The spray processing unit 76 executes spray control processing that is related to the work (the spraying work) by the spray device 4. In the present embodiment, as described above, the spray device 4 includes the plural functional units (the pump 43, the airflow generation unit 5, the static electricity application unit 45, the stirring unit 46, and the like). The spray processing unit 76 can separately control these functional units. In addition, the spray device 4 includes the plural spray nozzles 41 that are divided into the plural systems (the first system, the second system, the third system, and the like). The spray processing unit 76 can separately control each of the plural spray nozzles 41 by system.

More specifically, when the sprayer 1 starts the automatic travel at a work start position the spray processing unit 76 outputs a switch signal to the spray device 4, so as to switch the spray pattern on the basis of control information that is included in the predetermined target route. When receiving the switch signal, the spray device 4 performs the spraying work in the predetermined spray pattern.

The manual manipulation device 8 is a device for manually controlling the sprayer 1. In the sprayer 1, the controller 7 (acquisition processing unit 71) acquires the manipulation signal that is output from the manual manipulation device 8 in response to the manipulator's manipulation.

In the present embodiment, the manual manipulation device 8 is connected to the controller 7 of the sprayer 1 by a cable having a sufficient length, and communicates with the controller 7 in a wired manner. Thus, the manipulator does not have to get in the body 10 of the sprayer 1. For example, the manipulator can manually manipulate the sprayer 1 with the manual manipulation device 8 while standing around the body 10. Here, the manual manipulation device 8 may communicate with the sprayer 1 (the controller 7) by the wireless communication using the radio wave or the light. Even in this case, the manipulator can manually manipulate the sprayer 1 with the manual manipulation device 8 from the outside of the body 10. In short, the manual manipulation device 8 can be manipulated outside the body 10. Thus, for example, during loading or unloading of the sprayer 1 on or from a transport vehicle, the manipulator can manually manipulate the sprayer 1 from a safe place outside the body 10.

In the present embodiment, as illustrated in FIG. 11, the body 10 is provided with a housing unit 80 that can house the manual manipulation device 8. Then, as long as the housing unit 80 houses the manual manipulation device 8, the automatic travel processing unit 72 of the controller 7 starts the automatic travel of the sprayer 1 (the work vehicle). That is, when the manual manipulation device 8 is not in use, such as when the sprayer 1 travels automatically, the manual manipulation device 8 can be housed in the housing unit 80 of the body 10. This eliminates loss of the manual manipulation device 8, and the like. Meanwhile, when the manual manipulation device 8 is not housed in the housing unit 80, the sprayer 1 does not start the automatic travel. Thus, the manipulator can keep a habit of housing the manual manipulation device 8 in the housing unit 80 of the body 10 when the manual manipulation device 8 is not used.

More specifically, similar to the user interface 61 and the like, the housing unit 80 is provided on the second block 10R side. The user interface 61 includes: the manipulation unit 612 that accepts manipulation to make an adjustment for the work (the spraying work); and the display unit 611 that displays the information on the manipulation. For example, the display unit 611, which includes the liquid-crystal display, is arranged near the front end in an outer surface (a right surface) of the second block 10R. Below the display unit 611, the knob, the push button switch, or the like as the manipulation unit 612 is arranged. Then, the housing unit 80 is arranged further below the manipulation unit 612 in the outer surface (the right surface) of the second block 10R. The housing unit 80 is a recess that is large enough to house the manual manipulation device 8.

A contact or non-contact sensor (including a switch) is provided in the housing unit 80. The contact or non-contact sensor detects whether the manual manipulation device 8 is accommodated in the housing unit 80. A detection result by the sensor is acquired by (the acquisition processing unit 71 of) the controller 7. Only in the case where the detection result by the sensor indicates that the manual manipulation device 8 is housed in the housing unit 80, the automatic travel processing unit 72 starts the automatic travel of the sprayer 1 after acquiring the travel start instruction from the second manipulation terminal 220. That is, in the case where the detection result by the sensor indicates that the manual manipulation device 8 is not housed in the housing unit 80, the automatic travel processing unit 72 does not start the automatic travel of the sprayer 1 even after acquiring the travel start instruction from the second manipulation terminal 220.

As illustrated in FIG. 5, the manual manipulation device 8 includes a first travel manipulation unit 81, a second travel manipulation unit 82, a switching manipulation unit 83, and an indicator light 84. In the present embodiment, as an example, as illustrated in a balloon in FIG. 11, each of the first travel manipulation unit 81, the second travel manipulation unit 82, and the switching manipulation unit 83 includes any of various mechanical switches. Examples of the mechanical switch include, but are not limited to, a lever switch, a slide switch, a joystick, a seesaw switch, and a push button switch. The manual manipulation device 8 includes a circuit board therein. When the manual manipulation device 8 accepts manipulation on the first travel manipulation unit 81, the second travel manipulation unit 82, or the switching manipulation unit 83 from the manipulator, the manual manipulation device 8 outputs a manipulation signal (an electric signal) that corresponds to the manipulation. For example, when the manipulator manipulates the first travel manipulation unit 81 upward, the manual manipulation device 8 outputs a manipulation signal indicating that the first travel manipulation unit 81 has been manipulated upward.

The following manipulation assigned to the first travel manipulation unit 81, the second travel manipulation unit 82, and the switching manipulation unit 83. Manipulation to move the body 10 forward or reversely is assigned to the first travel manipulation unit 81. The first travel manipulation unit 81 includes a lever switch that is operable in the vertical direction (the up-down direction) when seen from the manipulator. Manipulation to make the body 10 turn to the left or turn to the right is assigned to the second travel manipulation unit 82. The second travel manipulation unit 82 includes a lever switch that is operable in the horizontal direction (the right-left direction) when seen from the manipulator. Manipulation to enable a manual travel mode in which the travel unit 11 travels manually is assigned to the switching manipulation unit 83 that includes a push button switch. The indicator light 84 is an LED, for example, and is turned on when the manual travel mode is enabled.

In the present embodiment, each of the first travel manipulation unit 81 and the second travel manipulation unit 82 is a lever-type (stick-type) manipulation tool. Thus, the first travel manipulation unit 81 can accept manipulation to move the body 10 between a "neutral position" and a "forward travel position" or between the "neutral position" and a "reverse travel position", for example. Similarly, the second travel manipulation unit 82 can accept manipulation to move the body 10 between the "neutral position" and a "right turning position" or between the "neutral position" and a "left turning position". Here, when the manipulator contacts neither the first travel manipulation unit 81 nor the second travel manipulation unit 82, each of the first travel manipulation unit 81 and the second travel manipulation unit 82 returns to the "neutral position". The "forward travel position" of the first travel manipulation unit 81 is a movable limit position on the upper side when seen from the manipulator. The "reverse travel position" of the first travel manipulation unit 81 is a movable limit position on the lower side when seen from the manipulator. The " right turning position " of the second travel manipulation unit 82 is a movable limit position on the right side when seen from the manipulator. The " left turning position " of the second travel manipulation unit 82 is a movable limit position on the left side when seen from the manipulator. Thus, for example, when the manual manipulation device 8 accepts, from the manipulator, the manipulation involving the movement of the first travel manipulation unit 81 from the "neutral position" to the "forward travel position" side (that is, the upper side), the manual manipulation device 8 outputs the manipulation signal that corresponds to the manipulation amount (a movement amount of the first travel manipulation unit 81).

### [3] Control Method for Sprayer

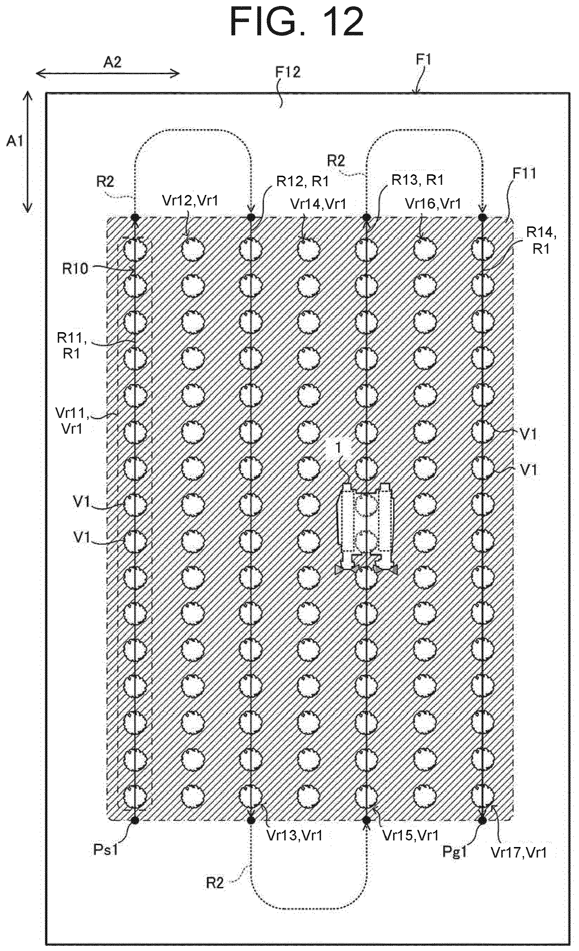

Hereinafter, a description will be made on a method for controlling the sprayer 1 (hereinafter simply referred to as a "control method") that is executed mainly by the controller 7 with reference to FIG. 12 to FIG. 21.

The control method according to the present embodiment is executed by the controller 7 that is mainly configured to be the computer system. Thus, in other words, the control method is embodied by a control program for the sprayer 1 (hereinafter simply referred to as a "control program"). That is, the control program (for the sprayer 1) according to the present embodiment is a computer program that causes the one or more processors to execute each type of the processing related to the control method (for the sprayer 1). Such a control program may cooperatively be executed by the controller 7, the first manipulation terminal 210, and the like, for example.

As illustrated in FIG. 5, the controller 7 that executes the control method constitutes a control system 100 (for the sprayer 1) together with the user interface 61, the manual manipulation device 8, and the like. The control system 100 is a system that at least executes processing related to the operation of the spray device 4 in the sprayer 1. In other words, the control system 100 according to the present embodiment includes: the controller 7 including the spray processing unit 76 and the like; the user interface 61; and the manual manipulation device 8. However, at least one of the user interface 61 and the manual manipulation device 8 may not be included as the component of the control system 100. For example, the control system 100 may not include the manual manipulation device 8.

From the above description, the control system 100 (for the sprayer 1) according to this embodiment at least includes the spray processing unit 76 (of the controller 7). The spray processing unit 76 causes automatic operation of the spray device 4 of the sprayer 1. The controller 7 is mounted to the body 10 of the sprayer 1 and is one of the components of the sprayer 1. Accordingly, the control system 100 constitutes the sprayer 1 together with the body 10 to which the spray device 4 and the like controlled by the control system 100 are mounted. In other words, the sprayer 1 according to the present embodiment includes the control system 100 and the body 10 that is mounted with the spray device 4.

A function related to the activation processing, processing related to the manual operation of the spray device 4, and processing related to the manual travel, each of which will be described below, can be employed individually. That is, the control system 100 only needs to have at least one of the function related to the activation processing, the processing related to the manual operation of the spray device 4, and the processing related to the manual travel.

### [3.1] Basic Operation

First, a description will be made on basic operation at the time when the automatic travel processing unit 72 in the control system 100 executes automatic travel processing and thus the sprayer 1 as the work vehicle travels automatically in the field F1 as the work site.

The automatic travel processing unit 72 starts the automatic travel of the sprayer 1 in the case where the predetermined automatic travel condition is satisfied and the acquisition processing unit 71 acquires an automatic travel start instruction. The automatic travel condition include, for example, that a target route R10 (see FIG. 12) is set, that a key switch (an engine key switch) for starting the engine (the power source 63) of the sprayer 1 is ON, and that the sprayer 1 is located at a work start position Ps1 (see FIG. 12). That is, in a state where the target route R10 is set and the engine is running, when the sprayer 1 moves to the work start position Ps1 in the target route R10 by the manipulator's manual manipulation of the manual manipulation device 8, the automatic travel condition is satisfied. In this state, for example, the manipulator manipulates the third manipulation unit 223 of the second manipulation terminal 220, and the second manipulation terminal 220 then outputs the automatic travel start instruction to the sprayer 1. Consequently, the automatic travel processing unit 72 starts the automatic travel of the sprayer 1.

As illustrated in FIG. 12, as an example, it is assumed that the work site is the field F1 where the seven crop rows Vr11 to Vr17 exist. This field F1 includes: a work area F11 (a hatched area in FIG. 12) where the crop rows Vr11 to Vr17 are formed; and a non-work area F12 that is a headland area formed around the work area F11 in a manner to surround the work area F11. In the field F1, the work area F11 is an area where the sprayer 1 performs the spraying work. The non-work area F12 is an area where the sprayer 1 does not perform the spraying work. That is, the work field (the field F1) includes: the work area F11 where the work is performed by the work vehicle (the sprayer 1); and the non-work area F12 where the work is not performed by the work vehicle (the sprayer 1).

In such a field F1, the sprayer 1 can travel automatically (travel autonomously) along the preset target route R10. For example, the sprayer 1 travels automatically along the target route R10 from the work start position Ps1 to a work end position Pg1. The target route R10 includes plural work routes R1 and plural travel routes R2. Each of the plural work routes R1 is a straight route on which the sprayer 1 performs the work (the spraying work) on the crop V1 as the work object (the spray target). Each of the plural travel routes R2 is a route (a non-work route) on which the sprayer 1 moves between the crop rows Vr1 without performing the spraying work. The plural travel routes R2 can include a turning route and a straight route.

In the example of FIG. 12, the target route R10 includes four work routes R11 to R14 in the work area F11. Each of the work routes R11 to R14 is formed along the length direction A1 that is a longitudinal direction of the crop row Vr1 (that is, a direction in which the plural crops V1 are aligned). As an example, the work route R11 is set on the crop row Vr11, the work route R12 is set on the crop row Vr13, the work route R13 is set on the crop row Vr15, and the work route R14 is set on the crop row Vr17. In the non-work area F12 that is located on each side of the work area F11 in the length direction A1, the travel route R2 is formed to connect two each of the work routes R11 to R14 that are adjacent to each other in the width direction A2. That is, basically, of the target route R10, the work route R1 is formed in the work area F11 of the work field (the field F1), and the travel route R2 is formed in the non-work area F12.

On the target route R10 described above, the sprayer 1 travels in the work area F11 from the work start position Ps1 toward one side (an upper side in FIG. 12) in the length direction A1 along the work route R11, and thereafter travels in the non-work area F12 toward a start end of the next work route R12 along the travel route R2. Then, the sprayer 1 travels in the work area F11 toward the other side (a lower side in FIG. 12) in the length direction A1 along the work route R12, and thereafter travels in the non-work area F12 toward a start end of the next work route R13 along the travel route R2. Next, the sprayer 1 travels in the work area F11 toward the one side in the length direction A1 along the work route R13, and thereafter travels in the non-work area F12 toward a start end of the next work route R14 along the travel route R2. Finally, the sprayer 1 travels in the work area F11 toward the other side in the length direction A1 along the work route R14 and travels to the work end position Pg1.

Here, it is assumed that the current position of the sprayer 1 is identified by using the position of the antenna 21 that is arranged at the center in the right-left direction D2 of the rear portion of the body 10 in the plan view. Accordingly, when the sprayer 1 travels automatically along the target route R10, the center in the right-left direction D2 of the rear portion of the body 10 passes on the target route R10. Furthermore, as described above, the sprayer 1 travels in the posture that the gate-shaped body 10 straddles the single crop row Vr1. During the travel of the sprayer 1, the sprayer 1 sprays the spray material (the chemical solution) on the crops V1 in the straddled crop row Vr1 and the crops V1 in the adjacent crop rows Vr1 to the straddled row Vr1.

Thus, for example, as illustrated in FIG. 12, the body 10 travels while straddling the crop row Vr15 during the sprayer's travel on the work route R13 that is set on the crop row Vr15. At this time, the first block 10L travels on the work path between the crop row Vr14 and the crop row Vr15, and the second block 10R travels on the work path between the crop row Vr15 and the crop row Vr16. Furthermore, at this time, the sprayer 1 can simultaneously spray the spray material (the chemical solution) on the crop V1 in the crop row Vr15, the crop V1 in the crop row Vr14 on the left side, and the crop V1 in the crop row Vr16 on the right side.

The sprayer 1 travels automatically in the predetermined row order. In the example of FIG. 12, the work route R1 is set in every other row in an arrangement order of the crop rows Vr11 including the crop rows Vr11, V13, V15, V17. Thus, the sprayer 1 travels automatically in every other row of the plural crop rows Vr1. While the sprayer 1 travels in every other row of the plural crop rows Vr1, the sprayer 1 simultaneously sprays the spray material (the chemical solution) on the spray targets (the crops V1) in the three adjacent rows in the width direction A2. This enables the spraying work on all the spray targets. However, such setting of the work routes R1 is merely an example. The sprayer 1 may travel in each row in the arrangement order of the crop rows Vr11, or may travel in every several rows.

Here, the sprayer 1 performs the spraying work while traveling on the work route R1. The sprayer 1 does not perform the spraying work while traveling on the travel route R2. Thus, the sprayer 1 starts the spraying work when starting the travel on the work route R1. Then, the sprayer 1 stops the spraying work when traveling to the terminal end of the work route R1. Then, the sprayer 1 travels on the travel route R2 while stopping the spraying work, and resumes the spraying work when reaching the start end of the next work route R1. In this way, the sprayer 1 performs the spraying work during the travel in the work area F11 and does not perform the spraying work during the travel in the non-work area F12.

In short, the spray processing unit 76 of the control system 100 causes the automatic operation of the spray device 4 in conjunction with the automatic travel of the sprayer 1 by the automatic travel processing unit 72. At this time, the spray processing unit 76 outputs the switch signal to the spray device 4. The switch signal switches the spray pattern on the basis of the control information that is included in (or associated with) the target route R10. In this way, the sprayer 1 performs the spreading work in the spray pattern that corresponds to the position of the sprayer 1 on the target route R10.

In the example of FIG. 12, the travel routes R2 include the turning routes for a right gentle turn and a left gentle turn. However, a turning mode for changing the orientation of the sprayer 1 is not limited to the "gentle turn" and may include, for example, the "pivotal brake turn", the "counter-rotation turn", or the like. Furthermore, the turning mode of the sprayer 1 may include the following turning mode. In the turning mode, in order to enable turning of the body 10 in a limited space, such as a so-called "fish tail turn", the body 10 makes a turn while being switched between the forward travel and the reverse travel.

The target route R10 is generated on the basis of information such as work vehicle information on the work vehicle (the sprayer 1), field information on the field F1, and work information on the work (the spraying work herein). Examples of the work vehicle information include, but are not limited to, information on a model of the sprayer 1, information on the position of the antenna 21 in the sprayer 1, information on a type of the work machine (the spray device 4 herein), information on the size and the shape of the work machine, information on the position of the spray device 4 with respect to the body 10, and information on a vehicle speed and an engine speed during the work by the body 10. The field information includes information on the location and the shape of the field F1, information on the work start position Ps1, information on the work end position Pg1, information on the work direction, and the like. The work direction described herein means a direction in which the sprayer 1 travels while performing the spraying work in the work area F11, which is the area in the field F1 excluding the non-work area F12 such as the headland. The work information includes information on the number of skips, information on a width of the non-work area F12, and the like. The number of skips is the number of the work routes R1 that are skipped when the sprayer 1 turns in the non-work area F12.

The work vehicle information, the field information, the work information, and the like may be set manually by the manipulator when the manipulator performs manipulation to register these pieces of the information on the first manipulation terminal 210, for example. Alternatively, the information on the location and the shape of the field F1, and the like may be acquired automatically in the case where the manipulator manually manipulates the sprayer 1 to make the sprayer 1 travel around the field F1 along an outer periphery once, and transition of the position information of the antenna 21 at the time is recorded, for example.

The generated target route R10 is stored in the memory (a storage unit) of the controller in the sprayer 1, and is used for the automatic travel by the automatic travel processing unit 72. The target route R10 can be displayed on the display unit 211 of the first manipulation terminal 210, or the like.

### [3.2] Operation at Activation

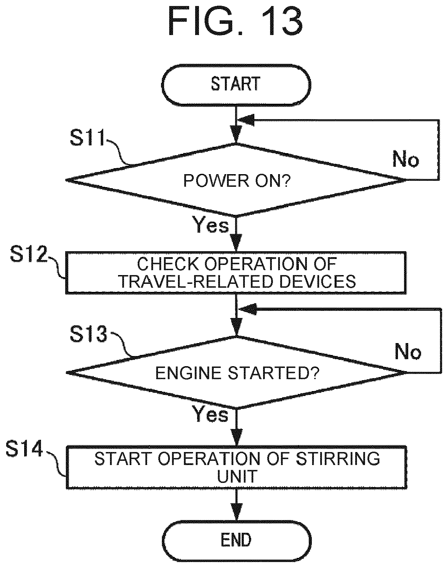

Next, a description will be made on the activation processing with reference to FIG. 13. The activation processing is executed in conjunction with the activation of the sprayer 1 such as the power-on of the sprayer 1 and/or the start of the engine (the power source 63). FIG. 13 is a flowchart illustrating an example of the activation processing in the control method according to the present embodiment.

More specifically, the control method (for the sprayer 1) according to the present embodiment includes the activation processing to control, for example, the spray device 4, the display 65, the sound output unit, and the like in conjunction with the activation of the sprayer 1. Thus, when the manipulator attempts to activate the sprayer 1, the manipulator only needs to activate the sprayer 1, and the spray device 4, the display 65, the sound output unit, and the like are operated automatically. This eliminates the need for the individual manipulation of each of the spray device 4, the display 65, the sound output unit, and the like by the manipulator.

In the present embodiment, as an example, in order to check whether each of the devices related to the automatic travel of the sprayer 1 (hereinafter, referred to as a "travel-related device") is normally operated, as the activation processing, the activation processing unit 75 causes each of the travel-related devices to be operated in a predetermined check pattern in conjunction with the activation of the sprayer 1. Here, examples of the traveling-related device include: the display 65, the lighting state of which is changed according to the operation state (the travel state, the spraying work performing state, and the like) of the sprayer 1; and the sound output units such as a horn that outputs a warning sound and a reverse buzzer that makes a sound during the reverse travel of the body 10.

More specifically, if the user (the manipulator) turns on a power switch of the sprayer 1 to power on the sprayer 1 (S11: Yes), in conjunction with this power-on, the activation processing unit 75 operates the travel-related devices including the display 65 and the sound output units in the predetermined check pattern (S12). At this time, the activation processing unit 75 lights the display 65 in a predetermined lighting pattern and causes each of the horn and the reverse buzzer to make a sound in a predetermined sounding pattern. The activation processing is executed all at once to check the operation of these travel-related devices (for example, the display 65, the horn, and the reverse buzzer) as targets each time the sprayer 1 is powered on.

Just as described, in the present embodiment, the operation of the travel-related devices such as the display 65, the horn, and the reverse buzzer is checked automatically in conjunction with the power-on of the sprayer 1 that is the manipulation always performed before the start of the automatic travel of the sprayer 1. Thus, the operation of the travel-related devices is easily, reliably checked in comparison with a case where the manipulator manipulates the user interface 61 to check the operation of these travel-related devices every time before the start of the automatic travel, for example.

Furthermore, as the activation processing, the activation processing unit 75 also operates the stirring unit 46 of the spray device 4 in conjunction with the activation of the sprayer 1. That is, the activation processing unit 75 causes the spray processing unit 76 to operate the stirring unit 46 among the plural functional units (the pump 43, the airflow generation unit 5, the static electricity application unit 45, the stirring unit 46, and the like) of the spray device 4 in conjunction with the activation of the sprayer 1. In the activation processing, the spray processing unit 76 starts operating the stirring unit 46. Then, the spray processing unit 76 keeps operating the stirring unit 46 while the engine (the power source 63) is driven.

More specifically, if the user (the manipulator) turns on the key switch (the engine key switch) of the sprayer 1 to start the engine (the power source 63) (S13:Yes), in conjunction with this engine (the power source 63) start, the activation processing unit 75 causes the spray processing unit 76 to operate the stirring unit 46 (S14). At this time, the spray processing unit 76 drives the electric motor of the stirring unit 46 to rotationally drive the blade member in the tank 64. Consequently, the spray processing unit 76 causes the stirring unit 46 to stir the spray material (the chemical solution) in the tank 64. Here, in the case where the sprayer 1 is powered on but the engine (the power source 63) is stopped, the activation processing unit 75 does not operate the stirring unit 46.

Just as described, in the present embodiment, the spray device 4 is automatically operated at least in conjunction with the activation of the sprayer 1. That is, at least the stirring unit 46 in the spray device 4 automatically starts operated in conjunction with the start of the engine (the power source 63) of the sprayer 1 that is the manipulation always performed before the start of the spraying work by the sprayer 1. Thus, the spray device 4 can easily, reliably start the operation in comparison with a case where the manipulator manipulates the user interface 61 to operate (the stirring unit 46 of) the spray device 4 every time before the start of the spraying work, for example. In particular, the stirring unit 46 automatically starts the operation. Thus, when the sprayer 1 reaches the work start position Ps1 and starts the spraying work, the chemical agent and the liquid contained in the chemical solution in the tank 64 can already be mixed well.

Meanwhile, it is assumed that the stirring unit 46 is operated in conjunction with the start of the engine (the power source 63) instead of the power-on of the sprayer 1. In such a case, when the sprayer 1 is simply powered on (the engine is stopped), the electric motor of the stirring unit 46 remains stopped. Thus, when the engine is stopped, it is possible to eliminate or minimize the battery consumption by the stirring unit 46.

Furthermore, the operation of the stirring unit 46, which is started by the activation processing, preferably continues even when the spraying work is not performed, for example, during the travel on the travel route R2 and when abnormality occurs to the spray device 4, for example. As an example, in the case where the abnormality such as clogging of the spray nozzle 41 occurs, the operation of the pump 43, the airflow generation unit 5, and the static electricity application unit 45 in the spray device 4 is forcibly stopped. In this way, wasteful spraying of the spray material (the chemical solution) is eliminated or minimized. On the contrary, the operation of the stirring unit 46 continues even during the occurrence of such abnormality. In this way, when the abnormality is eliminated and the spraying work is resumed, the chemical agent and the liquid contained in the chemical solution in the tank 64 can be mixed well.

In addition, in the case where an error that interferes with the continuation of the automatic travel occurs, the sprayer 1 has to be stopped. An example of the error is deviation of the sprayer 1 from the target route R10 during the automatic travel. Thus, in the case where the need for stopping the sprayer 1 during the automatic travel, just as described, arises, the automatic travel processing unit 72 can interrupt (stop) automatic travel processing of the sprayer 1 to stop the sprayer 1. However, even when the automatic travel processing of the sprayer 1 is interrupted and stopped, just as described, the operation of the stirring unit 46 continues.

The activation processing unit 75 in the control system 100 repeatedly executes the processing in steps S11 to S14. However, the flowchart illustrated in FIG. 13 is merely one example. The processing may appropriately be added or omitted, and the order of the processing may appropriately be changed.

### [3.3] Manual Operation of spray device

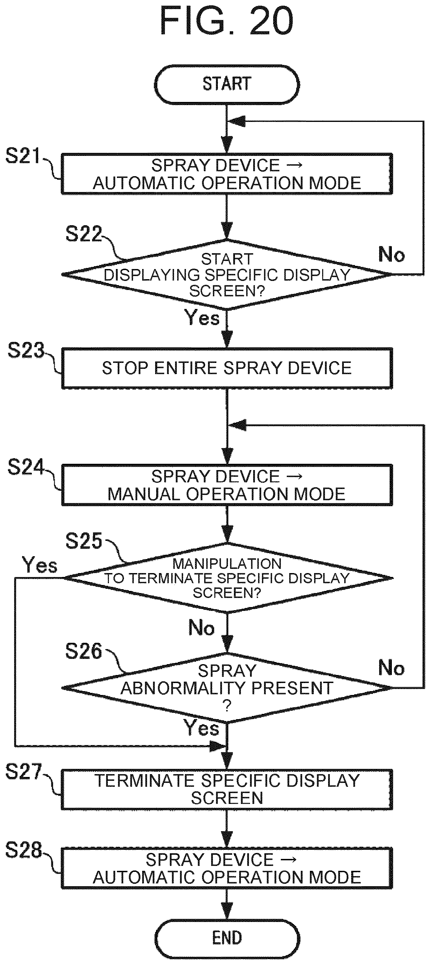

Next, a description will be made on processing related to the manual operation of the spray device 4 in the control method with reference to FIG. 14 to FIG. 20. The processing related to the manual operation of the spray device 4 is executed to operate the spray device 4 according to the user's manipulation (for example, the manipulation by the manipulator). As in the drawings of FIG 14 to FIG. 19, each of which illustrates the display screen displayed on the display unit 611, a one-dot chain line that indicates an area, a lead line, and reference signs are all given merely for the description and not actually displayed on the display unit 611. FIG. 20 is a flowchart illustrating an example of the processing related to the manual operation of the spray device 4 in the control method according to the present embodiment.

In the control method (for the sprayer 1) according to the present embodiment, as described above, the spray device 4 is automatically operated in conjunction with the automatic travel of the sprayer 1 by the automatic travel processing unit 72 and in conjunction with the activation of the sprayer 1. That is, when the sprayer 1 travels automatically along the target route R10, the spray processing unit 76 controls the plural functional units (the pump 43, the airflow generation unit 5, the static electricity application unit 45, the stirring unit 46, and the like) of the spray device 4. Consequently, the spray device 4 is automatically operated to perform the spraying work. When the sprayer 1 is activated, the spray processing unit 76 controls the stirring unit 46 of the spray device 4 to cause automatic operation of the stirring unit 46 of the spray device 4. Just as described, basically, the spray device 4 of the sprayer 1 performs the "automatic operation", in which the spray device 4 is automatically operated without relying on the user's manipulation, when being controlled by the spray processing unit 76.

In the control method according to the present embodiment, it is possible to temporarily suspend (cancel) such automatic operation of the spray device 4 and to manually operate the spray device 4 according to the user's manipulation. That is, operation modes of the spray device 4 include an "automatic operation mode" in which the spray device 4 is automatically operated without relying on the user's manipulation and a "manual operation mode" in which the spray device 4 is manually operated without relying on the user's manipulation.

During the manual operation, the spray processing unit 76 controls the spray device 4 according to the user's manipulation on the user interface 61, for example. However, such manual operation of the spray device 4 is enabled only while a "cancellation condition" is satisfied. Thus, while the "cancellation condition" is not satisfied, the spray device 4 is automatically operated without relying on the user's manipulation. Although limited in this way, in the control method according to the present embodiment, the spray device 4 can be operated manually according to the user's manipulation. Thus, the operation related to the spray device 4 can be checked, for example, by manually operating the spray device 4 before the start of the automatic travel.

In short, the control method according to the present embodiment is the method for controlling the sprayer 1 including the spray device 4. This control method includes: operating the spray device 4 automatically; and canceling the automatic operation of the spray device 4 to operate the spray device 4 manually according to the user's manipulation only while the cancellation condition is satisfied, so as to be able to check the operation related to the spray device 4. The "cancellation condition" in the present disclosure is a condition for switching the operation mode of the spray device 4 to the manual operation mode in which the automatic operation of the spray device 4 is cancelled to operate the spray device 4 manually. As the operation mode of the spray device 4, the manual operation mode is set only while this "cancellation condition" is satisfied, and the automatic operation mode is set in another case (that is, while the "cancellation condition" is not satisfied).

That is, in the control system 100 according to the present embodiment, only while the cancellation condition is satisfied, the spray processing unit 76 cancels the automatic operation of the spray device 4 and causes the spray device 4 to be operated manually according to the user's manipulation, so as to be able to check the operation related to the spray device 4. Just as described, based on the cancellation condition, the spray processing unit 76 can switch the operation mode of the spray device 4 between the "automatic operation mode" in which the spray device 4 is operated automatically without relying on the user's manipulation and the "manual operation mode" in which the spray device 4 is operated manually according to the user's manipulation.

With such a configuration, the spray device 4 can be operated manually according to the user's manipulation while the cancellation condition is satisfied. Thus, even in the case where the spray device 4 is located outside the work area F11, for example, the spray device 4 can temporarily be operated for a purpose of checking the operation related to the spray device 4. In addition, for example, it is also possible to temporarily stop the operation of the stirring unit 46 in the spray device 4 by manually operating the spray device 4 according to the user's manipulation. Thus, for example, when the operation related to the spray device 4 is to be checked, the manipulator does not have approach the sprayer 1 during the automatic travel to check the operation of the spray device 4. Therefore, it is possible to eliminate or minimize the reduction in the work efficiency, which is caused by taking the countermeasure to eliminate exposure of the manipulator to the spray material. As a result, the method for controlling the sprayer 1 and the control system 100 that eliminate or minimize the reduction in the work efficiency.

In addition, such manual operation of the spray device 4 is enabled only while the cancellation condition is satisfied. Thus, the automatic operation of the spray device 4 can be resumed automatically, which prevents the manipulator (the user) from forgetting to resume the automatic operation of the spray device 4. Furthermore, there is a case where the erroneous manipulation, failure, or the like of the manipulator causes the operation of the spray device 4 against the manipulator's intention and unnecessary spraying of the spray material, or the like. However, such a case is easily avoided.

Here, the cancellation condition includes displaying a particular display screen on the display unit 611. That is, for example, the cancellation condition is satisfied in a state where the specific display screen is displayed on the display unit 611 of the user interface 61, and the cancellation condition is not satisfied in a state where the specific display screen is not displayed. Thus, with the display on the display unit 611, the manipulator (the user) can determine whether the cancellation condition is satisfied, that is, whether the spray device 4 can be operated manually.

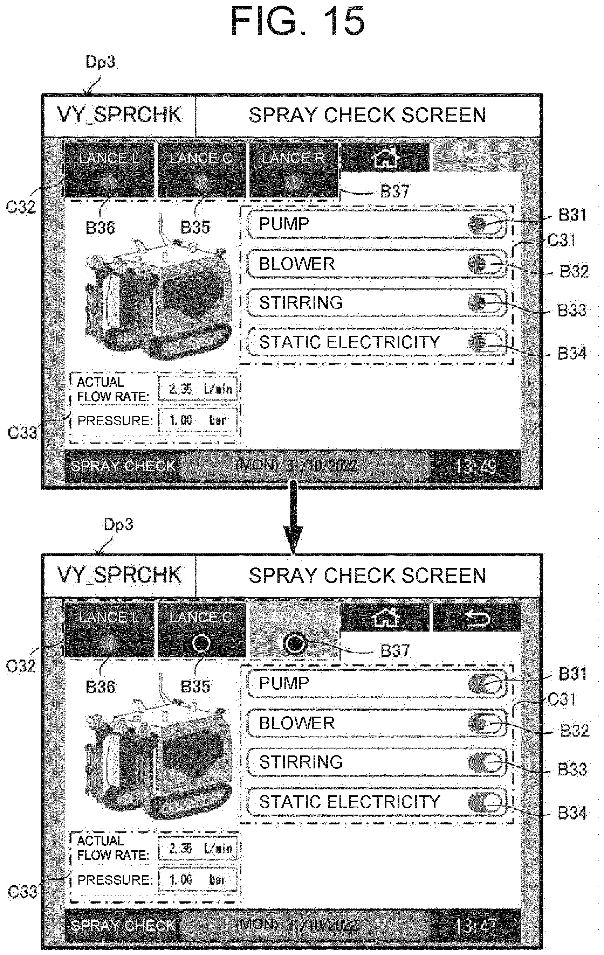

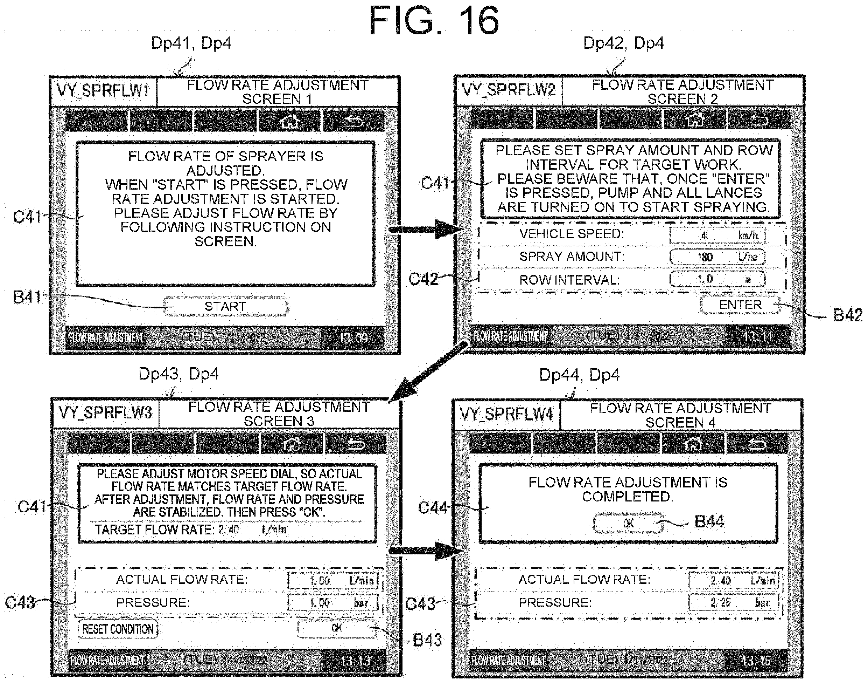

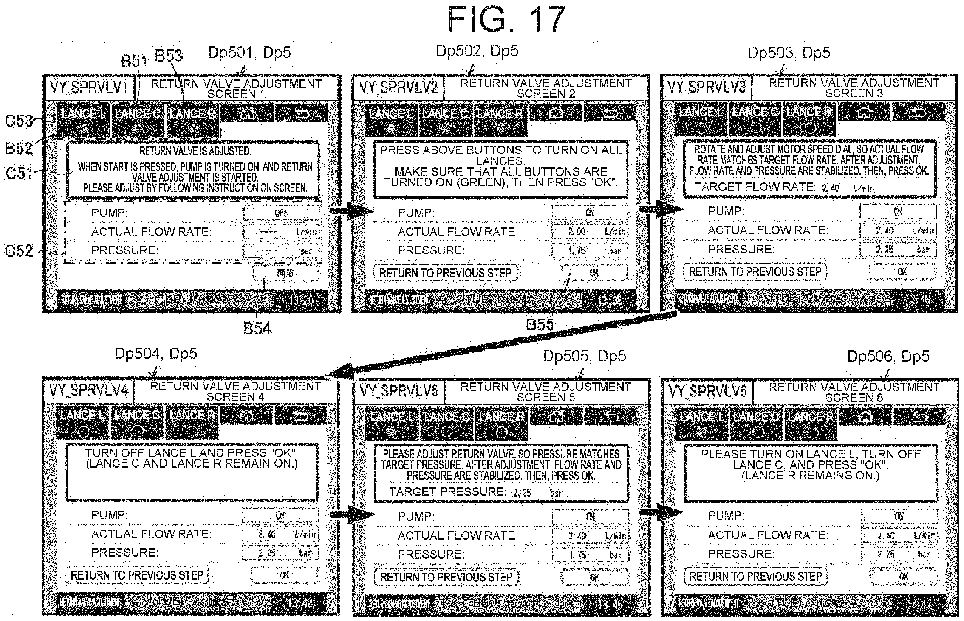

In the present embodiment, the specific display screen includes, for example: an operation check screen Dp3 (see FIG. 15) for the spray device 4; and a flow rate adjustment screen Dp4 (see FIG. 16) and a return valve adjustment screen Dp5 (see FIG. 17), each of which is an adjustment screen for the spray device 4. In other words, the cancellation condition includes that the operation check screen Dp3 is displayed on the display unit 611 (hereinafter referred to as a "first condition"), that the flow rate adjustment screen Dp4 is displayed on the display unit 611 (hereinafter referred to as a "second condition"), and that the return valve adjustment screen Dp5 is displayed on the display unit 611 (hereinafter referred to as a "third condition"). Just as described, in the present embodiment, the cancellation condition includes the plural conditions. The cancellation condition is satisfied when any of these plural conditions (the first condition, the second condition, and the third condition) is satisfied.

As an example, the display processing unit 74 can display the home screen Dp1 as illustrated in an upper part of FIG. 14 on the display unit 611 of the user interface 61. The home screen Dp1 is a display screen that is initially displayed by the control method. The home screen Dp1 is also a basic display screen that is initially displayed on the display unit 611 while the sprayer 1 is activated. In a state where the home screen Dp1 is displayed, the display screen that is displayed on the display unit 611 can be shifted from the home screen Dp1 to any of the various display screens according to the user's manipulation on the manipulation unit 612.

For example, when a spray adjustment button B11 on the home screen Dp1 is selected, the display processing unit 74 shifts the display screen that is displayed on the display unit 611 to a spray menu screen Dp2 as illustrated in a lower part of FIG. 14. The spray menu screen Dp2 includes an operation check button B21, a flow rate adjustment button B22, and a return valve adjustment button B23. In a state where the spray menu screen Dp2 is displayed, the display screen that is displayed on the display unit 611 can be shifted from the spray menu screen Dp2 to the operation check screen Dp3, the flow rate adjustment screen Dp4, or the return valve adjustment screen Dp5 in according to the user's manipulation on the manipulation unit 612.

For example, in the case where the operation check button B21 on the spray menu screen Dp2 is selected, the display processing unit 74 shifts the display screen that is displayed on the display unit 611 to the operation check screen Dp3 as illustrated in FIG. 15.

The operation check screen Dp3 includes a first selection area C31, a second selection area C32, and a display area C33. The first selection area C31 includes buttons B31 to B34 that respectively correspond to the pump 43, the airflow generation unit 5 (described as "BLOWER"), the stirring unit 46 (described as "STIRRING"), and the static electricity application unit 45 (described as "STATIC ELECTRICITY"). The second selection area C32 includes buttons B35 to B37 that respectively correspond to the first system (described as "LANCE C"), the second system (described as "LANCE L"), and the third system (described as "LANCE R"). The display area C33 displays the flow rate of the spray material (the chemical solution) that is discharged from the pump 43, the pressure in the spray piping through which the spray material (the chemical solution) is discharged from the pump 43, and the like.

When such an operation check screen Dp3 is displayed on the display unit 611, the first condition of the cancellation condition is satisfied. Thus, the spray processing unit 76 cancels the automatic operation of the spray device 4 and causes the spray device 4 to be operated manually according to the user's manipulation, so as to enable checking of the operation related to the spray device 4.

For example, as illustrated in an upper part of FIG. 15, when all of the buttons B31 to B37 are not selected (off), all of the pump 43, the airflow generation unit 5, the stirring unit 46, and the static electricity application unit 45 in the spray device 4 are stopped. Meanwhile, as illustrated in a lower part of FIG. 15, when the buttons B31, B33, B34 are selected (turned on), the pump 43, the stirring unit 46, and the static electricity application unit 45 corresponding thereto are operated. In addition, in the example illustrated in the lower part of FIG. 15, the buttons B35, B37 are selected (turned on). Thus, the spray material (the chemical solution) is sprayed only from the spray nozzles 41 of the first system and the third system corresponding to the buttons B35, B37.

Accordingly, in the state where the operation check screen Dp3 is displayed, the spray processing unit 76 controls the spray device 4 according to the user's manipulation on the manipulation unit 612. As a result, it is possible to manually manipulate the spray device 4. In addition, at this time, it is possible to only operate only any functional unit of the plural functional units (the pump 43, the airflow generation unit 5, the static electricity application unit 45, the stirring unit 46, and the like), and it is also possible to operate only the spray nozzles 41 in any system of the plural systems (the first system, the second system, the third system, and the like).

Here, when the operation check screen Dp3 is displayed, first, as illustrated in the upper part of FIG. 15, all of the buttons B31 to B37 are in a non-selected (off) state. In this state, the operation of the spray device 4, including the stirring unit 46 that operates in conjunction with the activation of the sprayer 1, is completely stopped. The manipulator (the user) can operate only the appropriate functional unit or the appropriate system by the manual manipulation from this state. That is, in the present embodiment, when the cancellation condition is satisfied, the automatic operation of the spray device 4 is cancelled, and the spray device 4 is stopped. Then, the spray device 4 is manually operated according to the user's manipulation. This configuration facilitates the operation check of the spray device 4.

Meanwhile, in the case where the flow rate adjustment button B22 on the spray menu screen Dp2 is selected, the display processing unit 74 shifts the display screen that is displayed on the display unit 611 to the flow rate adjustment screen Dp4 as illustrated in FIG. 16.

The flow rate adjustment screen Dp4 is a screen on which the flow rate of the pump 43 is adjusted. The flow rate adjustment screen Dp4 includes a guide area C41 for guiding a manipulation method to the manipulator. For example, as illustrated in FIG. 16, the flow rate adjustment screen Dp4 is shifted in an order of the flow rate adjustment screens Dp41, Dp42, Dp43, Dp44, and enables the adjustment of the flow rate. That is, when a start button B41 on the flow rate adjustment screen Dp41 is manipulated, the flow rate adjustment screen Dp4 is shifted to the flow rate adjustment screen Dp42. The flow rate adjustment screen Dp42 includes an entry field C42 for setting the vehicle speed, the spray amount, and the row interval. When an enter button B42 is manipulated in a state where the vehicle speed, the spray amount, and the row interval are entered in the entry field C42, the flow rate adjustment screen Dp42 is shifted to the flow rate adjustment screen Dp43. At this time, the spray processing unit 76 starts the operation of the spray device 4.

In a state where the flow rate adjustment screen Dp43 is displayed, a discharge flow rate of the pump 43 can be adjusted according to the user's manipulation of the manipulation unit 612 of the user interface 61. The flow rate adjustment screen Dp43 includes a display area C43 where the flow rate of the flow rate of the spray material (the chemical solution) discharged from the pump 43, the pressure in the spray piping through which the spray material (the chemical solution) is discharged from the pump 43, and the like are displayed. An OK button B43 is manipulated after values of the flow rate and the pressure are stabilized. In this way, the flow rate adjustment screen Dp43 is shifted to the flow rate adjustment screen Dp44. The flow rate adjustment screen Dp44 includes a message area C44 where a message is provided to indicate completion of the flow rate adjustment. When an OK button B44 in the message area C44 is manipulated, the display processing unit 74 shifts the display screen that is displayed on the display unit 611 from the flow rate adjustment screen Dp4 (Dp44) to the spray menu screen Dp2.

When such a flow rate adjustment screen Dp4 (Dp41 to Dp44) is displayed on the display unit 611, the second condition of the cancellation condition is satisfied. Thus, the spray processing unit 76 cancels the automatic operation of the spray device 4 and causes the spray device 4 to be operated manually according to the user's manipulation, so as to enable checking of the operation related to the spray device 4.

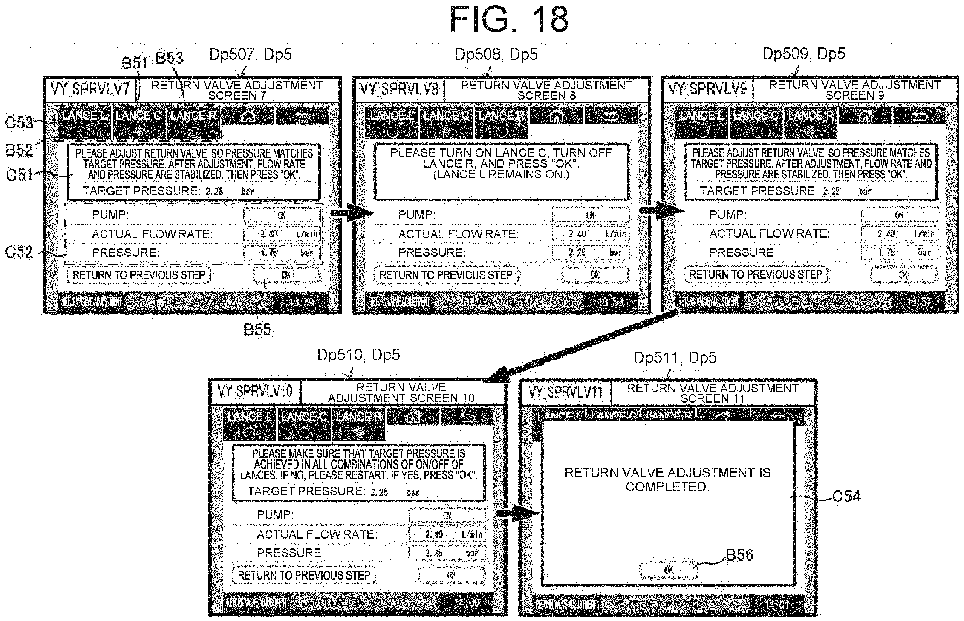

Meanwhile, in the case where the return valve adjustment button B23 on the spray menu screen Dp2 is selected, the display processing unit 74 shifts the display screen that is displayed on the display unit 611 to the return valve adjustment screen Dp5 as illustrated in FIG. 17 and FIG. 18.

The return valve adjustment screen Dp5 is a screen on which an opening amount of a return valve is adjusted. The return valve is provided to a return path that serves as a path for the spray material to flow from a supply path to the tank 64. The supply path serves as a path for the spray material from the pump 43 to the spray pipe 42. The return valve adjustment screen Dp5 includes a guide area C51 for guiding a manipulation method to the manipulator. The return valve adjustment screen Dp5 further includes a display area C52 and a selection area C53. The display area C52 is an area that displays the operation state (ON/OFF) of the pump 43, the flow rate of the spray material (the chemical solution) discharged from the pump 43, the pressure in the spray piping through which the spray material (the chemical solution) is discharged from the pump 43, and the like. The selection area C53 includes buttons B51 to B53 that respectively correspond to the first system (described as "LANCE C"), the second system (described as "LANCE L"), and the third system (described as "LANCE R").

For example, as illustrated in FIG. 17 and FIG. 18, the return valve adjustment screen Dp5 is shifted in an order of the return valve adjustment screen Dp501 to Dp511, and enables the adjustment of the return valve. That is, when a start button B54 on the return valve adjustment screen Dp501 is manipulated, the return valve adjustment screen Dp501 is shifted to the return valve adjustment screen Dp502. At this time, the spray processing unit 76 starts the operation of the pump 43 in the spray device 4. On the return valve adjustment screen Dp502, any of the buttons B51 to B53 is selected, and an OK button B55 is manipulated. Then, the return valve adjustment screen Dp502 is shifted to the return valve adjustment screen Dp503.

In a state where the return valve adjustment screen Dp503 is displayed, a discharge flow rate of the pump 43 can be adjusted according to the user's manipulation of the manipulation unit 612 of the user interface 61. The OK button B55 is manipulated after values of the flow rate and the pressure in the display area C52 are stabilized. In this way, the return valve adjustment screen Dp503 is shifted to the return valve adjustment screen Dp504. On the return valve adjustment screen Dp504, the button B52 is turned off, and the OK button B55 is manipulated. Then, the return valve adjustment screen Dp504 is shifted to the return valve adjustment screen Dp505.

In a state where the return valve adjustment screen Dp505 is displayed, the return valve can be adjusted according to the user's manipulation of the manipulation unit 612 of the user interface 61. The OK button B55 is manipulated after the values of the flow rate and the pressure in the display area C52 are stabilized. In this way, the return valve adjustment screen Dp505 is shifted to the return valve adjustment screen Dp506. On the return valve adjustment screen Dp506, a button B51 is turned off, the button B52 is turned on, and the OK button B55 is manipulated. Then, the return valve adjustment screen Dp506 is shifted to the return valve adjustment screen Dp507.

In a state where the return valve adjustment screen Dp507 is displayed, the return valve can be adjusted according to the user's manipulation of the manipulation unit 612 of the user interface 61. The OK button B55 is manipulated after the values of the flow rate and the pressure in the display area C52 are stabilized. In this way, the return valve adjustment screen Dp507 is shifted to the return valve adjustment screen Dp508. On the return valve adjustment screen Dp508, the button B51 is turned on, the button B53 is turned off, and the OK button B55 is manipulated. Then, the return valve adjustment screen Dp508 is shifted to the return valve adjustment screen Dp509.

In a state where the return valve adjustment screen Dp509 is displayed, the return valve can be adjusted according to the user's manipulation of the manipulation unit 612 of the user interface 61. The OK button B55 is manipulated after the values of the flow rate and the pressure in the display area C52 are stabilized. In this way, the return valve adjustment screen Dp509 is shifted to the return valve adjustment screen Dp510. On the return valve adjustment screen Dp510, the OK button B55 is manipulated. Then, the return valve adjustment screen Dp510 is shifted to the return valve adjustment screen Dp511.

The return valve adjustment screen Dp511 includes a message area C54 where a message is provided to indicate completion of the return valve adjustment. When an OK button B56 in the message area C54 is manipulated, the display processing unit 74 shifts the display screen that is displayed on the display unit 611 from the return valve adjustment screen Dp5 (Dp511) to the spray menu screen Dp2.

When such a return valve adjustment screen Dp5 (Dp501 to Dp511) is displayed on the display unit 611, the third condition of the cancellation condition is satisfied. Thus, the spray processing unit 76 cancels the automatic operation of the spray device 4 and causes the spray device 4 to be operated manually according to the user's manipulation, so as to enable checking of the operation related to the spray device 4.

In short, in the present embodiment, the specific display screens include the screens for accepting the user's manipulation (the operation check screen Dp3, the flow rate adjustment screen Dp4, and the return valve adjustment screen Dp5). Just as described, the user's manipulation is accepted on the specific display screens (the operation check screen Dp3, the flow rate adjustment screen Dp4, and the return valve adjustment screen Dp5). Thus, the manipulator (the user) can easily, manually manipulate the spray device 4 on each of the specific display screens.

Furthermore, in the present embodiment, when the spray device 4 is operated manually, the spray device 4 can be operated for each functional unit. Accordingly, the manipulator (the user) can operate only the appropriate functional unit of the plural functional units including the pump 43, the airflow generation unit 5, the static electricity application unit 45, the stirring unit 46, and the like by the manual manipulation. Thus, the manipulator (the user) can easily check the operation of the spray device 4.

In the present embodiment, when the spray device 4 is operated manually, the spray device 4 can be operated for each system. Accordingly, for example, the manipulator (the user) can operate the spray nozzles 41 of the appropriate system by the manual manipulation among the spray nozzles 41 of the plural systems including the first system, the second system, the third system, and the like. Thus, the manipulator (the user) can easily check the operation of the spray device 4.

When the display screen displayed on the display unit 611 is shifted from the operation check screen Dp3 to the home screen Dp1 or the spray menu screen Dp2, only the stirring unit 46, which is operated in conjunction with the activation of the sprayer 1, in the spray device 4 is operated, and all of the other functional units are stopped. Then, when the display screen that is displayed on the display unit 611 is shifted from the operation check screen Dp3 to another screen, the cancellation condition is no longer satisfied. Thus, the manual operation of the spray device 4 is prohibited, and the spray device 4 is operated automatically.

In the case of the occurrence of the abnormality related to the spray device 4, such as a short circuit or sensor value abnormality, it is restricted (prohibited) to shift the display screen that is displayed on the display unit 611 to any of the operation check screen Dp3, the flow rate adjustment screen Dp4, and the return valve adjustment screen Dp5. In addition, in the case where the operation check screen Dp3, the flow rate adjustment screen Dp4, or the return valve adjustment screen Dp5 is displayed when the abnormality related to the spray device 4 occurs, the display processing unit 74 forcibly terminates the display of respective one of these display screens, and shifts the display screen that is displayed on the display unit 611 to the spray menu screen Dp2. In this case, only the stirring unit 46, which is operated in conjunction with the activation of the sprayer 1, in the spray device 4 is operated, and all of the other functional units are stopped.

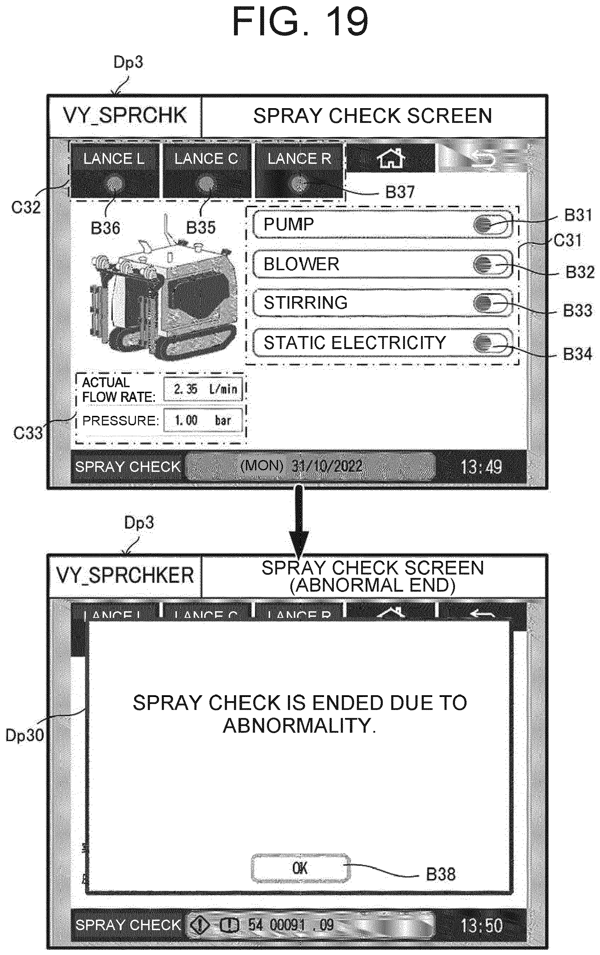

As an example, as illustrated in an upper part of FIG. 19, in the case where the abnormality related to the spray device 4 occurs while the operation check screen Dp3 is displayed, as illustrated in a lower part of FIG 19, the display processing unit 74 displays an error screen Dp30 in a superimposed manner on the operation check screen Dp3. The error screen Dp30 is provided to notify that the display of the operation check screen Dp3 is terminated. When an OK button B38 is operated on the error screen Dp30, the display screen that is displayed on the display unit 611 is shifted to the spray menu screen Dp2. A similar error screen thereto is also displayed in the case where the abnormality related to the spray device 4 occurs while the flow rate adjustment screen Dp4 or the return valve adjustment screen Dp5 is displayed.

Just as described, in the present embodiment, the manual operation of the spray device 4 is restricted when the abnormality occurs to the spray device 4. That is, when the abnormality related to the spray device 4 occurs, reliability of the operation check of the spray device 4 is reduced. Thus, in such a state, it is possible to avoid the operation check with low reliability from being performed by restricting (for example, prohibiting) the manual operation of the spray device 4 for the operation check of the spray device 4.

As it has been described so far, according to the control method in the present embodiment, for example, as illustrated in FIG. 20, the operation mode of the spray device 4 is switched between the automatic operation mode and the manual operation mode.

More specifically, the spray processing unit 76 basically operates the spray device 4 in the "automatic operation mode" in which the spray device 4 is automatically operated without relying on the user's manipulation (S21). Then, the spray processing unit 76 determines whether the display of the specific display screen on the display unit 611 is started (S22). The specific display screen includes the operation check screen Dp3, the flow rate adjustment screen Dp4, and the return valve adjustment screen Dp5. Thus, when any of the operation check screen Dp3, the flow rate adjustment screen Dp4, and the return valve adjustment screen Dp5 is displayed on the display unit 611, the spray processing unit 76 determines that the display of the specific display screen is started (S22: Yes), and the processing proceeds to step S23. On the other hand, when none of the operation check screen Dp3, the flow rate adjustment screen Dp4, and the return valve adjustment screen Dp5 is displayed on the display unit 611, the spray processing unit 76 determines that the display of the specific display screen is not started (S22: No), and the processing returns to step S21.

In step S23, the spray processing unit 76 determines that the cancellation condition is satisfied, cancels the automatic operation of the spray device 4, and stops the entire operation of the spray device 4 including the stirring unit 46. Thereafter, in step S24, the spray processing unit 76 switches the operation mode of the spray device 4 to the "manual operation mode" in which the spray device 4 is manually operated according to the user's manipulation.

Then, (the display processing unit 74 of) the control system 100 determines whether the manipulation to terminate the display of the specific display screen (the operation check screen Dp3, the flow rate adjustment screen Dp4, or the return valve adjustment screen Dp5) has been performed (S25). If the manipulation to terminate the display of the specific display screen has not been performed (S25: No), (the display processing unit 74 of) the control system 100 determines presence or absence of the abnormality related to the spray device 4 (S26). Then, if the abnormality related to the spray device 4 is absent (S26: No), the processing returns to step S24.

On the other hand, if the manipulation to terminate the display of the specific display screen has been performed (S25:Yes) or if the abnormality related to the spray device 4 is present (S26: Yes), (the display processing unit 74 of) the control system 100 terminates the display of the specific display screen (the operation check screen Dp3, the flow rate adjustment screen Dp4, or the return valve adjustment screen Dp5) (S27). Thereafter, in next step S28, the spray processing unit 76 determines that the cancellation condition is not satisfied, and switches the operation mode of the spray device 4 to the "automatic operation mode" in which the spray device 4 is operated automatically without relying on the user's manipulation.

The control system 100 repeatedly executes the processing in steps S21 to S28 during the operation of the sprayer 1. However, the flowchart illustrated in FIG. 20 is merely one example. The processing may appropriately be added or omitted, and the order of the processing may appropriately be changed.

### [3.4] Manual Travel

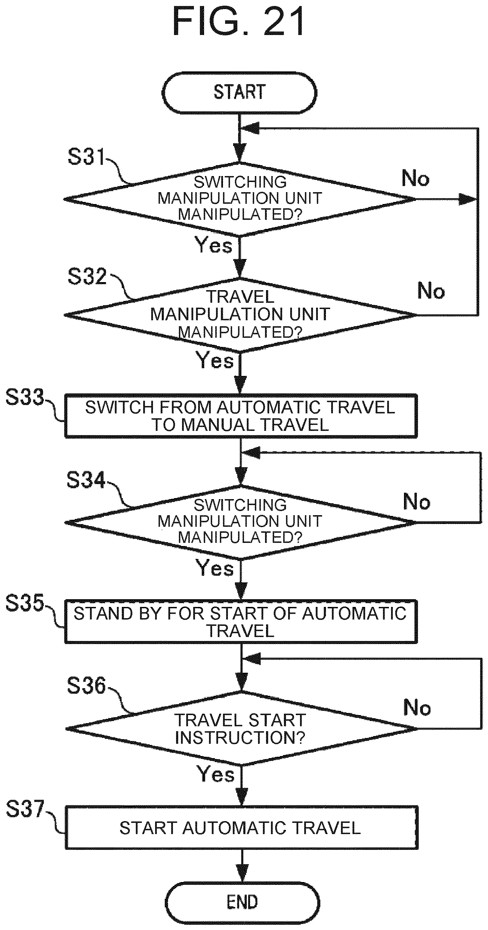

Next, a description will be made on processing related to the "manual travel" in the control method with reference to FIG. 21. In the manual travel, the sprayer 1 as the work vehicle travels in response to the manipulation of the manual manipulation device 8 by the manipulator. FIG. 21 is a flowchart illustrating the control method according to the first embodiment, in particular, an example of processing related to the manual travel of the sprayer 1.

More specifically, the control method according to the present embodiment includes processing to interrupt (stop) the automatic travel processing of the sprayer 1 and cause the sprayer 1 to travel manually in response to the manipulation of the manual manipulation device 8. As an example, in the case where the remaining amount of the chemical solution as the spray material falls below a threshold value, in the case where the fuel remaining amount falls below a threshold value, or the like, it is necessary to stop the automatic travel processing and cause the manipulator to replenish the spray material (the chemical solution) or the fuel. In addition, also during loading or unloading of the sprayer 1 on or from the transport vehicle, or the like, the manipulator has to manually manipulate the sprayer 1 from the safe place outside the body 10. Thus, in the case where the manipulator has to manually manipulate the sprayer 1, just as described, the "manual travel" is enabled. In the manual travel, the automatic travel processing of the sprayer 1 is interrupted (stopped), and the operator manually manipulates and moves the sprayer 1 to, for example, a replenishment position that is set in the vicinity of the field F1, or the like.

When the manual travel is made, the manual travel processing unit 73 executes the travel control processing. In the travel control processing, the travel unit 11 is controlled according to the manipulation signal that is output from the manual manipulation device 8 and is acquired by the acquisition processing unit 71. Thus, in order to start the manual travel, in the state where the sprayer 1 is stopped, the manipulator takes out the manual manipulation device 8, which is housed in the housing unit 80 (see FIG. 11) of the body 10, and manipulates the manual manipulation device 8.

By the way, in the control method according to the present embodiment, the manual travel is started only after the switching manipulation unit 83 of the manual manipulation device 8 is manipulated and then the first travel manipulation unit 81 or the second travel manipulation unit 82 is further manipulated. That is, the manual travel is not started only after the switching manipulation unit 83 for enabling the manual travel mode is manipulated (S31:Yes). The manual travel is started only after the first travel manipulation unit 81 or the second travel manipulation unit 82 for actually causing the sprayer 1 to travel manually is manipulated (S32: Yes). More specifically, in the case where the first travel manipulation unit 81 is manipulated from the "neutral position" to the "forward travel position" side or the "reverse travel position" side, or the second travel manipulation unit 82 is manipulated from the "neutral position" to the "right turning position" side or the "left turning position" side within a certain time period after the switching manipulation unit 83 is pressed, the automatic travel is switched to the manual travel (S33).

That is, in FIG. 21, if the switching manipulation unit 83 is not manipulated (S31: No), or if neither the first travel manipulation unit 81 nor the second travel manipulation unit 82 is manipulated (S32: No), the control system 100 repeatedly executes the processing in steps S31, S32. In this period, the control system 100 continues the automatic travel.

Meanwhile, the manual travel is terminated only by pressing the switching manipulation unit 83 of the manual manipulation device 8. That is, only by performing the switching manipulation (the pressing manipulation of the switching manipulation unit 83) for switching the manual travel to the automatic travel during the automatic travel of the sprayer 1 (S34: Yes), the manual travel of the sprayer 1 is terminated, and the sprayer 1 stands by for the start of the automatic travel (S35). If the switching manipulation unit 83 is not manipulated (S34: No), the control system 100 repeatedly executes the processing in step S34. In this period, the control system 100 continues the manual travel.

Then, in the state where the sprayer 1 stands by for the start of the automatic travel, if the manipulator manipulates the third manipulation unit 223 of the second manipulation terminal 220, and the second manipulation terminal 220 outputs the automatic travel start instruction to the sprayer 1 (S36: Yes), the automatic travel processing unit 72 starts the automatic travel of the sprayer 1 (S37). If the automatic travel start instruction is not output (S36: No), the control system 100 repeatedly executes the processing in step S36. In this period, the sprayer 1 remains stopped without the automatic travel.

The control system 100 repeatedly executes the processing in steps S31 to S37. However, the flowchart illustrated in FIG. 21 is merely one example. The processing may appropriately be added or omitted, and the order of the processing may appropriately be changed.

In short, the control method according to the present embodiment includes: causing the sprayer 1 to travel automatically along the target route R10; and causing the sprayer 1 to travel manually according to the manipulation of the manual manipulation device 8. Here, the control method further includes: switching from the automatic travel to the manual travel when at least the switching manipulation is performed for the switching from the automatic travel to the manual travel, and the manual manipulation device 8 is manipulated for the manual travel of the sprayer 1. Here, the switching manipulation for the switching from the automatic travel to the manual travel is, for example, pressing of the switching manipulation unit 83 in the manual manipulation device 8. The manipulation for the manual travel of the sprayer 1 is, for example, the manipulation to move the first travel manipulation unit 81 or the second travel manipulation unit 82 in the manual manipulation device 8 from the neutral position.

Thus, for example, in the case where only the switching manipulation (the pressing manipulation of the switching manipulation unit 83) is performed for the switching from the automatic travel to the manual travel during the automatic travel of the sprayer 1, the manual travel of the sprayer 1 is not terminated, and the sprayer 1 continues the automatic travel. Then, in this state, when the manual manipulation device 8 is further manipulated (the first travel manipulation unit 81 or the second travel manipulation unit 82 is manipulated) for the manual travel of the sprayer 1, the automatic travel of the sprayer 1 is terminated, and the sprayer 1 starts the manual travel. Accordingly, for example, even when the switching manipulation unit 83 of the manual manipulation device 8, which is housed in the housing unit 80, is pressed not by the manipulator but due to vibration of the body 10, or the like, pressing of the switching manipulation unit 83 is not enough to terminate the automatic travel of the sprayer 1. As a result, it is possible to eliminate or minimize the behavior of the sprayer 1 that is against the manipulator's intention. Thus, unintended pressing of the switching manipulation unit 83 is permissible, increasing a degree of freedom in design of the housing for the manual manipulation device 8, for example.

The control method according to the present embodiment further includes the processing to automatically increase the speed of the engine (the power source 63) to a threshold value or higher in the case where the engine (the power source 63) of the sprayer 1 is in a low idle state where the speed of the engine (the power source 63) is lower than the threshold value at the time of the switching from the automatic travel to the manual travel. That is, in the case where the engine (the power source 63) of the sprayer 1 is in the low idle state at the start of the manual travel, the engine (the power source 63) is automatically controlled in a high idle state immediately after the switching from the automatic travel to the manual travel.

Accordingly, even in the case where the engine (the power source 63) is in the low idle state due to the interruption (the stop) of the automatic travel, the speed of the engine (the power source 63) can be increased to the speed that is high enough to drive the motor 112 of the travel unit 11 with the start of the manual travel. Thus, it is possible to improve responsiveness of the travel unit 11 to the manipulation of the manual manipulation device 8 immediately after the switching from the automatic travel to the manual travel.

The control method according to the present embodiment includes the processing to prohibit the manual travel of the sprayer 1 in a specific direction according to the detection result by the obstacle detector 62 at the time of the switching from the automatic travel to the manual travel. More specifically, according to the detection results by the front contact sensor 627 and the rear contact sensor 628, the manual travel involving the forward travel or the reverse travel of the body 10 is prohibited.

For example, in the case where the front contact sensor 627 detects the obstacle, the manual travel processing unit 73 prohibits the manual travel involving the forward travel while allowing the manual travel involving the reverse travel, so as to prevent the manual travel of the sprayer 1 in the (forward) direction in which the obstacle is present. That is, in this case, the manipulator allows the manual travel of the body 10 only in the reverse direction with the manipulation of the manual manipulation device 8. Meanwhile, in the case where the rear contact sensor 628 detects the obstacle, the manual travel processing unit 73 prohibits the manual travel involving the reverse travel while allowing the manual travel involving the forward travel, so as to prevent the manual travel of the sprayer 1 in the (reverse) direction in which the obstacle is present. That is, in this case, the manipulator allows the manual travel of the body 10 only in the forward direction with the manipulation of the manual manipulation device 8.

As a result, for example, even in the case where the sprayer 1 contacts the obstacle during the automatic travel and is then stopped, and thereafter the manipulator starts the manual travel of the sprayer 1 without noticing the presence of the obstacle, it is possible to prevent the manual travel of the sprayer 1 toward the obstacle.

### [4] Modified Examples

Modified examples of the first embodiment will be listed below. The modified examples, which will be described below, may appropriately be combined for implementation.

The controller 7 according to the present disclosure includes the computer system. The computer system mainly includes, as the hardware, the one or more processors and the one or more types of the memory. The function as the controller 7 in the present disclosure is implemented when the processor executes the program that is recorded in the memory of the computer system. The program may be recorded in the memory of the computer system in advance, may be provided through an electric communication line, or may be provided in the form of a non-transitory recording medium, such as a memory card, an optical disc, or a hard disk drive, that is readable by the computer system. In addition, at least one of the functional units included in the controller 7 may include an electronic circuit.

The consolidation of at least some of the functions of the controller 7 into the single casing is not an essential configuration of the controller 7. The components of the controller 7 may separately be provided in the plural casings. On the contrary, the functions that are separately provided to the plural devices (for example, the controller 7 and the first manipulation terminal 210) may be integrated in the single casing for the controller 7. Furthermore, at least some of the functions of the controller 7 may be implemented by a cloud (cloud computing) or the like.

The sprayer 1 may be used for the work at the work sites that are not limited to the orchard such as the vineyard or the apple orchard but also include another type of the field F1 and the work site other than the field F1. The spray material that is sprayed by the sprayer 1 is not limited to chemical solution, and may be water, the fertilizer, a disinfectant solution, another type of the solution, powder, or the like, for example. Similarly, the spray target on which the spray material is sprayed is not limited to the grape tree, and may be another type of the crop or an object other than the crop (including an inorganic matter). The sprayer 1 is not limited to an unmanned machine that is operated by the automatic operation. The sprayer 1 may be configured to be operated by the manipulation (including the remote operation) by the person (the manipulator). For example, the sprayer 1 may be of a passenger type (a manned machine) that the manipulator can get in. Also, in this case, the sprayer 1 is provided with the antenna 21 and the like in order to grasp the current position of the sprayer 1.

The cancellation condition is not limited to the condition that the specific display screen is displayed on the display unit 611. For example, the cancellation condition may include specific manipulation by the manipulator (the user). Furthermore, the specific display screen may only include one or two of the operation check screen Dp3, the flow rate adjustment screen Dp4, and the return valve adjustment screen Dp5. The specific display screen may include a screen other than the operation check screen Dp3, the flow rate adjustment screen Dp4, and the return valve adjustment screen Dp5.

The support frame 3 only needs to be attached to the one end portion in the front-rear direction D3 of the body 10, and may be attached to the front portion of the body 10. In this case, the work unit (the spray nozzle 41) that is supported by the support frame 3 is also arranged not in the rear portion but in the front portion of the body 10.

The sprayer 1 may include a pair of the spray devices 4 aligned in the front-rear direction D3. In this way, the sprayer 1 can perform the work (the spraying work) with each of the paired spray devices 4 (work devices) aligned in the front-rear direction D3. As a result, the work efficiency can be improved when compared to the case where the work is performed only with any one of the spray devices 4. The sprayer 1 may further include a rotational drive device that generates rotary power to rotate the support frame 3 about the rotation axis Ax1 with respect to the body 10.

The body 10 only needs to have the first block 10L and the second block 10R aligned in the right-left direction D2, and the arrangement of the first block 10L and the second block 10R may be reversed in the right-left direction D2. In detail, the first block 10L that is provided with the power source 63 and the like may be located on the right side while the second block 10R that is provided with the user interface 61 and the like may be located on the left side.

The travel unit 11 is not limited to the crawler-type travel device and may be configured to have one or more wheels and travel with rotation of the one or more wheels. In addition, the configuration of the travel unit 11 is not limited to the configuration that the travel unit 11 is driven by the hydraulic motor. The travel unit 11 may be configured to be driven by an electric motor, for example.

The sprayer 1 is not limited to the air-assisted sprayer as in the first embodiment. For example, the sprayer 1 may be of an electrostatic spraying type, a type combining the air-assisting type and the electrostatic spraying type, or the like. In the case where the sprayer 1 is of the electrostatic spraying type, the airflow generation unit 5 can be omitted.

The power source 63 is not limited to the engine. The power source 63 may have a motor (an electric motor), for example, or may be a hybrid power source including the engine and the motor.

The sprayer 1 may be in a mode that the body 10 does not have the gate shape, but the entire body 10 travels (on the work path) between the pair of the adjacent crop rows Vr1. In this case, the sprayer 1 travels on each of the work paths without straddling the crop row Vr1. Also, in this case, the spray device 4 performs the spraying work by switching the spray pattern among the spray pattern in which the spray device 4 sprays the chemical solution on both of the crop rows Vr1 in the right-left direction D2, the spray pattern in which the spray device 4 sprays the chemical solution only on the left crop row Vr1, and the spray pattern in which the spray device 4 sprays the chemical solution only on the right crop row Vr1.

Each of the antennas 21, 22 is not limited to the position identification antenna and may be a wireless communication antenna, for example. Furthermore, each of the antennas 21, 22 is not limited to the receiving antenna and may be a sending antenna or a receiving/sending antenna.

The user interface 61 may have, in addition to or instead of the display unit 611, a unit that presents the information to the user by outputting voice or the like, for example. Furthermore, at least one of the adjustment items (the flow rate, the pressure, and the like) may automatically be adjusted by the controller by using the manipulation unit 612 of the user interface 61. In this case, the manipulation unit 612 can appropriately be omitted, and the user interface 61 may only display the adjustment result on the display unit 611.

Similarly, the configuration of each of the first manipulation terminal 210 and the second manipulation terminal 220 is not limited to that in the first embodiment. For example, each of the first manipulation terminal 210 and the second manipulation terminal 220 may be configured to output the temporary stop instruction and the like in response to the manipulation signal from the pointing device, such as the keyboard or the mouse, the voice input, the gesture input, or another terminal.

In addition, in the first embodiment, the description has been made on the sprayer 1 as the example of the work vehicle. However, the work vehicle is not limited to the sprayer 1. For example, the work vehicle may be a plucking machine. In this case, a plucking unit that performs plucking work is an example of the work unit and is supported by the support frame 3.

### [Supplementary Notes of Invention]

Hereinafter, the summary of the invention extracted from the above-described embodiment will be supplemented. Note that each configuration and each processing function described in the supplementary notes below may be selected, omitted, or combined as appropriate.

### <Supplementary Note 1>

A control method for a sprayer including a spray device, the control method including: automatically operating the spray device; and, only while a cancellation condition is satisfied, canceling automatic operation of the spray device to manually operate the spray device according to a user's manipulation, and thereby enabling checking of operation related to the spray device.

### <Supplementary Note 2>

The control method for a sprayer according to Supplementary Note 1, in which the cancellation condition includes a condition that a specific display screen is displayed on a display unit.

### <Supplementary Note 3>

The control method for a sprayer according to Supplementary Note 2, in which the specific display screen includes a screen for accepting the user's manipulation.

### <Supplementary Note 4>

The control method for a sprayer according to any one of Supplementary Notes 1 to 3, in which the spray device includes a plurality of functional units with different functions, and, when the spray device is operated manually, the spray device can be operated for each of the functional units.

### <Supplementary Note 5>

The control method for a sprayer according to any one of Supplementary Notes 1 to 4, in which the spray device includes a plurality of spray nozzles divided into a plurality of systems, and, when the spray device is operated manually, the spray device can be operated for each of the systems.

### <Supplementary Note 6>

The control method for a sprayer according to any one of Supplementary Notes 1 to 5, in which the spray device is automatically operated at least in conjunction with activation of the sprayer.

### <Supplementary Note 7>

The control method for a sprayer according to any one of Supplementary Notes 1 to 6, in which, when the cancellation condition is satisfied, automatic operation of the spray device is canceled, the spray device is then stopped, and thereafter the spray device is manually operated according to the user's manipulation.

### <Supplementary Note 8>

The control method for a sprayer according to any one of Supplementary Notes 1 to 7, in which manual operation of the spray device is restricted when abnormality occurs to the spray device.

### <Supplementary Note 9>

The control method for a sprayer according to any one of Supplementary Notes 1 to 8, further including: causing the sprayer to travel automatically along a target route; causing the sprayer to travel manually according to manipulation of a manual manipulation device; and switching from the automatic travel to the manual travel in the case where switching manipulation is performed at least for switching from the automatic travel to the manual travel, and manipulation for the manual travel of the sprayer is performed on the manual manipulation device.

### <Supplementary Note 10>

A control program for a sprayer, the control program causing one or more processors to execute the control method for a sprayer according to any one of Supplementary Notes 1 to 9.

### REFERENCE SIGNS LIST

1 sprayer
4 spray device
8 manual manipulation device
10 body
41 spray nozzle
100 control system for sprayer
611 display unit
76 spray processing unit
R10 target route
Dp3 operation check screen (specific display screen)
Dp4 flow rate adjustment screen (specific display screen)
Dp5 return valve adjustment screen (specific display screen)

## Claims

1. A control method for a sprayer including a spray device, the control method comprising:
automatically operating the spray device; and
only while a cancellation condition is satisfied, canceling automatic operation of the spray device to manually operate the spray device according to a user's manipulation, and thereby enabling checking of operation related to the spray device.

2. The control method for a sprayer according to claim 1, wherein
the cancellation condition includes a condition that a specific display screen is displayed on a display unit.

3. The control method for a sprayer according to claim 2, wherein
the specific display screen includes a screen for accepting the user's manipulation.

4. The control method for a sprayer according to any one of claims 1 to 3, wherein
the spray device includes a plurality of functional units with different functions, and
when the spray device is operated manually, the spray device can be operated for each of the functional units.

5. The control method for a sprayer according to any one of claims 1 to 3, wherein
the spray device includes a plurality of spray nozzles divided into a plurality of systems, and
when the spray device is operated manually, the spray device can be operated for each of the systems.

6. The control method for a sprayer according to any one of claims 1 to 3, wherein
the spray device is automatically operated at least in conjunction with activation of the sprayer.

7. The control method for a sprayer according to any one of claims 1 to 3, wherein
when the cancellation condition is satisfied, automatic operation of the spray device is canceled, the spray device is then stopped, and thereafter the spray device is manually operated according to the user's manipulation.

8. The control method for a sprayer according to any one of claims 1 to 3, wherein
manual operation of the spray device is restricted when abnormality occurs to the spray device.

9. The control method for a sprayer according to any one of claims 1 to 3, further comprising:
causing the sprayer to travel automatically along a target route;
causing the sprayer to travel manually according to manipulation of a manual manipulation device; and
switching from the automatic travel to the manual travel in the case where switching manipulation is performed at least for switching from the automatic travel to the manual travel and manipulation for the manual travel of the sprayer is performed on the manual manipulation device.

10. A control program for a sprayer, the control program causing one or more processors to execute the control method for a sprayer according to any one of claims 1 to 3.

11. A control system for a sprayer, the control system comprising:
a spray processing unit that automatically operates a spray device of a sprayer, wherein
only while a cancellation condition is satisfied, the spray processing unit cancels automatic operation of the spray device to manually operate the spray device according to a user's manipulation, and thereby enables checking of operation related to the spray device.

12. A sprayer comprising:
the control system for a sprayer according to claim 11; and
a body to which the spray device is mounted.
